(19) Europäisches Patentamt
European Patent Office
Office européen des brevets

(11) EP 3 907 253 B1

(12) EUROPEAN PATENT SPECIFICATION

(45) Date of publication and mention of the grant of the patent:
**14.08.2024 Bulletin 2024/33**

(21) Application number: **20903021.2**

(22) Date of filing: **10.11.2020**

(51) International Patent Classification (IPC):
***C08J 3/12*** *(2006.01)* ***C08J 3/075*** *(2006.01)*
***C08J 3/24*** *(2006.01)* ***C08K 5/11*** *(2006.01)*
***C08L 101/14*** *(2006.01)* ***C08K 5/101*** *(2006.01)*
***C08L 33/14*** *(2006.01)*

(52) Cooperative Patent Classification (CPC):
(C-Sets available)
**C08J 3/12; C08J 3/075; C08J 3/245; C08K 5/101; C08K 5/11; C08L 101/14;** C08J 2333/02;
C08L 33/14 (Cont.)

(86) International application number:
**PCT/KR2020/015696**

(87) International publication number:
**WO 2021/125559 (24.06.2021 Gazette 2021/25)**

(54) **SUPER ABSORBENT POLYMER COMPOSITION**
SUPERABSORBIERENDE POLYMERZUSAMMENSETZUNG
COMPOSITION DE POLYMÈRE SUPER ABSORBANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2019 KR 20190172494**
**06.11.2020 KR 20200148077**

(43) Date of publication of application:
**10.11.2021 Bulletin 2021/45**

(73) Proprietor: **LG Chem, Ltd.**
**Seoul 07336, (KR)**

(72) Inventors:
- **PARK, Se Yeol**
  **Daejeon 34122 (KR)**
- **KIM, Gicheul**
  **Daejeon 34122 (KR)**
- **CHOI, Hyeon**
  **Daejeon 34122 (KR)**
- **KIM, Mihee**
  **Daejeon 34122 (KR)**
- **YOON, Kiyoul**
  **Daejeon 34122 (KR)**
- **KIM, Ki Hyun**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 4 137 539**
**WO-A1-2009/076764**
**WO-A1-2018/120056**
**WO-A1-97/38740**
**CN-A- 104 667 895**
**KR-A- 20110 006 771**
**US-A1- 2012 289 607**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 101/14, C08K 5/101;**
**C08L 101/14, C08K 5/11**

## Description

[TECHNICAL FIELD]

The present disclosure relates to a super absorbent polymer composition. More specifically, it relates to a super absorbent polymer composition prepared such that agglomeration between polymer particles is suppressed by including an additive having a specific structure, and thus an additional pulverizing process is not required after drying.

[BACKGROUND OF ART]

A super absorbent polymer (SAP) is a type of synthetic polymeric material capable of absorbing 500 to 1000 times its own weight of moisture. Various manufacturers have denominated it with different names, such as SAM (Super Absorbency Material), AGM (Absorbent Gel Material), and the like. Such super absorbent polymers started to be practically applied in sanitary products, and they are now being widely used not only for hygiene products, but also for water retaining soil products for gardening, water stop materials for the civil engineering and construction, sheets for raising seedling, fresh-keeping agents for food distribution fields, materials for poultices, or the like.

These super absorbent polymers have been widely used in the field of hygienic materials such as diapers or sanitary napkins. In such hygienic materials, the super absorbent polymer is generally contained in a state of being spread in the pulp. In recent years, however, continuous efforts have been made to provide hygienic materials such as diapers having a thinner thickness. As a part of such efforts, the development of so-called pulpless diapers and the like in which the pulp content is reduced or pulp is not used at all is being actively advanced.

As described above, in the case of hygienic materials in which the pulp content is reduced or the pulp is not used, a super absorbent polymer is contained at a relatively high ratio and these super absorbent polymer particles are inevitably contained in multiple layers in the hygienic materials. In order for the whole super absorbent polymer particles contained in the multiple layers to more efficiently absorb a large amount of liquid such as urine, it is necessary for the super absorbent polymer to basically exhibit high absorption performance as well as fast absorption rate.

Meanwhile, such a super absorbent polymer is generally prepared by the method including a step of polymerizing a monomer to prepare a hydrogel polymer containing a large amount of moisture, and a step of drying the hydrogel polymer, and then pulverizing the dried hydrogel polymer into polymer particles having a desired particle diameter. However, when the hydrogel polymer is dried and then pulverized as described above, a large amount of fine powder is generated, and thus there has been a problem of deteriorating physical properties of the finally produced super absorbent polymer.

Accordingly, there is a continuous demand for the development of a technology capable of manufacturing a super absorbent polymer without generating fine powder, in addition to improving water retention capacity (CRC) representing basic absorption performance and water-retaining capacity of the super absorbent polymer, and absorbency under pressure (AUP) representing a property of retaining absorbed liquid even under external pressure.

WO 2009/076764 A1 discloses a controlled release formulation, comprising a core comprising a superabsorbent material in form of gel. The superabsorbent material is a calcium salt of an acrylic acid polymer crosslinked with divinylglycol. The core may comprise other excipients and manufacturing aids including a lubricant like magnesium stearyl fumarate.

WO 97/38740 A1 discloses a compressed absorbent aggregate, comprising superabsorbent, microcrystalline cellulose and hydrophilic lubricant which might be sodium stearyl fumarate.

EP 4137539 A1 is prior art according to Art. 54(3) EPC and discloses a super absorbent polymer which comprises

super absorbent polymer particles containing a cross-linked polymer of a water-soluble ethylene-based unsaturated monomer having at least partially neutralized acidic groups and a cross-linking agent;
hydrophobic particles; and
a carboxylic acid-based additive,
wherein the carboxylic acid-based additive is at least one selected from the group consisting of a carboxylic acid represented by the following Chemical Formula 1 and a salt thereof:

[Chemical Formula 2]

$$A-(EO)_m-(B_1-B_2)_n-C$$

in Chemical Formula 2,

A is alkyl having 5 to 21 carbon atoms,
EO is ethylene oxide ($-CH_2CH_2O-$),
m is an integer of 0 to 8,
$B_1$ is -OCO-, -COO-, or $-COOCH(R_1)COO-$,

wherein $R_1$ is alkyl having 1 to 5 carbon atoms,

$B_2$ is alkylene having 1 to 5 carbon atoms, alkenylene having 2 to 5 carbon atoms, or alkynylene having 2 to 5 carbon atoms,
n is an integer of 1 to 3, and
C is a carboxyl group.

[DETAILED DESCRIPTION OF THE INVENTION]

[Technical Problem]

The present disclosure specifically relates to a super absorbent polymer composition prepared such that agglomeration between polymer particles is suppressed by including an additive having a specific structure, and thus an additional pulverizing process is not required after drying.

[Technical Solution]

In order to solve the above problems, there is provided a super absorbent polymer composition including

super absorbent polymer particles containing a cross-linked polymer of a water-soluble ethylene-based unsaturated monomer having at least partially neutralized acidic groups and an internal cross-linking agent; and
a carboxylic acid-based additive,
wherein the carboxylic acid-based additive is at least one selected from the group consisting of a carboxylic acid represented by the following Chemical Formula 1 and a salt thereof:

[Chemical Formula 1]

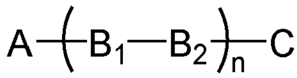

in Chemical Formula 1,

A is alkyl having 5 to 21 carbon atoms,
$B_1$ is -OCO-, -COO-, or $-COOCH(R_1)COO-$,
$B_2$ is

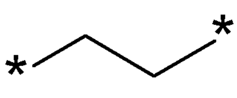
,
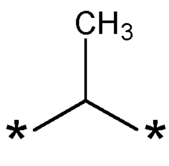
, or
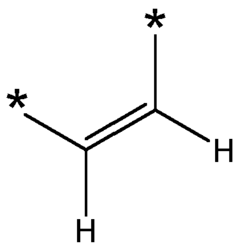
,

wherein * is a bonding site with a neighboring atom,

wherein $R_1$ is alkyl having 1 to 4 carbon atoms,

n is 1 , and
C is a carboxyl group,

wherein the carboxylic acid-based additive is included in an amount of 0.01 to 10 wt% based on a total weight of the super absorbent polymer composition, and

wherein the super absorbent polymer composition does not include a compound having a glucose unit containing a plurality of hydroxyl groups in the molecule,

wherein a super absorbent polymer composition is excluded which comprises

super absorbent polymer particles containing a cross-linked polymer of a water-soluble ethylene-based unsaturated monomer having at least partially neutralized acidic groups and a cross-linking agent;

hydrophobic particles; and

a carboxylic acid-based additive,

wherein the carboxylic acid-based additive is at least one selected from the group consisting of a carboxylic acid represented by the following Chemical Formula 4 and a salt thereof:

[Chemical Formula 4]

$$A-(EO)_m-\left(B_1-B_2\right)_n-C$$

in Chemical Formula 4,

A is alkyl having 5 to 21 carbon atoms,
EO is ethylene oxide ($-CH_2CH_2O-$),
m is 0,
$B_1$ is -OCO-, -COO-, or $-COOCH(R_1)COO-$,

wherein $R_1$ is alkyl having 1 to 5 carbon atoms,

$B_2$ is alkylene having 1 to 5 carbon atoms, alkenylene having 2 to 5 carbon atoms, or alkynylene having 2 to 5 carbon atoms,
n is an integer of 1 to 3, and
C is a carboxyl group.

[ADVANTAGEOUS EFFECTS]

As the super absorbent polymer composition of the present disclosure includes the carboxylic acid-based additive, it may be pulverized to a desired particle diameter without agglomeration between particles pulverized in the presence of the additive, so that an additional pulverizing process is not required after drying.

[BRIEF DESCRIPTION OF THE DRAWINGS]

FIG. 1 is graphs of high-performance liquid chromatography (HPLC) for the super absorbent polymer compositions prepared in Example 1 and Comparative Example 1.

FIG. 2 is a photograph showing the evaluation of particle agglomeration characteristics of the hydrogel polymer prepared in Example 2.

FIG. 3 is a photograph showing the evaluation of particle agglomeration characteristics of the hydrogel polymer prepared in Example 6.

FIG. 4 is a photograph showing the evaluation of particle agglomeration characteristics of the hydrogel polymer prepared in Comparative Example 1.

FIG. 5 is a photograph showing the evaluation of particle agglomeration characteristics of the hydrogel polymer prepared in Comparative Example 4.

[DETAILED DESCRIPTION OF THE EMBODIMENTS]

The terminology used herein is for the purpose of describing particular embodiments only and is not intended to be limiting of the invention. The singular forms are intended to include the plural forms as well, unless the context clearly indicates otherwise. It will be further understood that the terms "include", "have", or "possess" when used in this

specification, specify the presence of stated features, steps, components, or combinations thereof, but do not preclude the presence or addition of one or more other features, steps, components, or combinations thereof.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the preparation method of a super absorbent polymer and the super absorbent polymer will be described in more detail according to specific embodiments of the present invention.

The terminologies are used merely to refer to specific embodiments, and are not intended to restrict the present disclosure unless it is explicitly expressed. Singular expressions of the present disclosure may include plural expressions unless they are differently expressed contextually.

According to one embodiment of the present disclosure, there is provided a super absorbent polymer composition including super absorbent polymer particles containing a cross-linked polymer of a water-soluble ethylene-based unsaturated monomer having at least partially neutralized acidic groups and an internal cross-linking agent; and a carboxylic acid-based additive,

wherein the carboxylic acid-based additive is at least one selected from the group consisting of a carboxylic acid represented by the following Chemical Formula 1 and a salt thereof:

[Chemical Formula 1]

$$A-(B_1-B_2)_n-C$$

in Chemical Formula 1,

A is alkyl having 5 to 21 carbon atoms,
$B_1$ is -OCO-, -COO-, or -COOCH($R_1$)COO-,
$B_2$ is

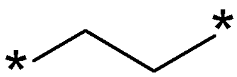
,
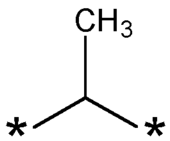
, or
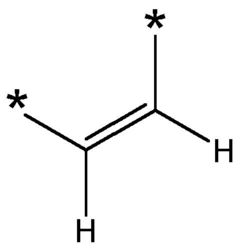
,

wherein * is a bonding site with a neighboring atom,
wherein $R_1$ is alkyl having 1 to 4 carbon atoms,
n is 1, and
C is a carboxyl group,
wherein the carboxylic acid-based additive is included in an amount of 0.01 to 10 wt% based on a total weight of the super absorbent polymer composition, and
wherein the super absorbent polymer composition does not include a compound having a glucose unit containing a plurality of hydroxyl groups in the molecule,
wherein a super absorbent polymer composition is excluded which comprises
super absorbent polymer particles containing a cross-linked polymer of a water-soluble ethylene-based unsaturated monomer having at least partially neutralized acidic groups and a cross-linking agent;
hydrophobic particles; and
a carboxylic acid-based additive,
wherein the carboxylic acid-based additive is at least one selected from the group consisting of a carboxylic acid represented by the following Chemical Formula 4 and a salt thereof:

[Chemical Formula 4]

$$A-(EO)_m-(B_1-B_2)_n-C$$

in Chemical Formula 4,

A is alkyl having 5 to 21 carbon atoms,
EO is ethylene oxide ($-CH_2CH_2O-$),
m is 0,
$B_1$ is -OCO-, -COO-, or $-COOCH(R_1)COO-$,

wherein $R_1$ is alkyl having 1 to 5 carbon atoms,

$B_2$ is alkylene having 1 to 5 carbon atoms, alkenylene having 2 to 5 carbon atoms, or alkynylene having 2 to 5 carbon atoms,
n is an integer of 1 to 3, and
C is a carboxyl group.

The terminology "polymer" in the present disclosure is in a state in which a water-soluble ethylene-based unsaturated monomer is polymerized, and may include all moisture content ranges, or all particle diameter ranges. Among the polymers, a polymer having a moisture content of about 40 wt% or more after polymerization and before drying may be referred to as a hydrogel polymer, and particles in which the hydrogel polymer is pulverized and dried may be referred to as a cross-linked polymer.

In addition, the terminology "super absorbent polymer particle" refers to a particulate material containing a cross-linked polymer in which a water-soluble ethylene-based unsaturated monomer having at least partially neutralized acidic groups is polymerized and cross-linked by an internal cross-linking agent.

In addition, the terminology "super absorbent polymer" is used to encompass all of a cross-linked polymer in which a water-soluble ethylene-based unsaturated monomer having at least partially neutralized acidic groups is polymerized or a base resin in the form of powder consisting of super absorbent polymer particles in which the cross-linked polymer is pulverized, and the cross-linked polymer or the base resin further processed, for example, surface cross-linking, fine powder reassembly, drying, pulverization, classification, etc., to be in a state suitable for commercialization, depending on the context. Accordingly, the terminology "super absorbent polymer composition" may be interpreted as encompassing a composition including a super absorbent polymer, that is, a plurality of super absorbent polymer particles.

When the dried polymer was pulverized in the pulverizing step essentially required producing super absorbent polymer particles having a desired particle diameter during the manufacturing process of the super absorbent polymer, a large amount of fine powder was generated, which deteriorated physical properties. However, a non-dried hydrogel polymer could be coarse-pulverized to have a particle diameter of approximately 1 to 10 mm, but it was impossible to pulverize the non-dried hydrogel polymer to have a particle diameter of less than 1 mm due to agglomeration of pulverized particles.

Therefore, the present inventors have confirmed that pulverizing the hydrogel polymer in the presence of the carboxylic acid-based additive can be performed such that pulverized particles have a desired particle diameter without agglomeration, and accordingly, a separate pulverizing process is not required after drying, thereby completing the present invention. Particularly, the particles included in the super absorbent polymer composition prepared according to the above preparation method are characterized in that they exhibit similar surface tension while having higher bulk density compared to the case where the additive is not included.

Specifically, the carboxylic acid-based additive has a hydrophobic functional group and a hydrophilic functional group at the same time. Meanwhile, since the water-soluble ethylene-based unsaturated monomer contains an acidic group (-COOH) and/or a neutralized acidic group ($-COO^-$), a large amount of hydrophilic moiety is present on a surface of the hydrogel polymer prepared by polymerization due to the acidic group (-COOH) and/or the neutralized acidic group ($-COO^-$) remaining without participating in polymerization. Therefore, when the additive is mixed with the hydrogel polymer, a hydrophilic functional group of the additive is adsorbed to at least some part of the hydrophilic moiety present on the surface of the hydrogel polymer, and the surface of the polymer to which the additive is adsorbed becomes hydrophobic by a hydrophobic functional group located at the other end of the additive. Accordingly, agglomeration between polymer particles can be suppressed.

More specifically, in the carboxylic acid-based additive, the hydrophobic functional group is an alkyl having 5 to 21 carbon atoms (part A), and the hydrophilic functional group is part C, specifically, a carboxyl group (COOH) or a

carboxylate group ($COO^-$) in the case of a salt. The hydrophobic functional group and the hydrophilic functional group are respectively located at both ends of the additive. In particular, the carboxylic acid-based additive further includes part ($B_1$-$B_2$) in addition to part A and part C at both ends, and the part ($B_1$-$B_2$) improves adsorption performance with respect to the polymer surface, which may be insufficient only with the part C. Accordingly, the additive having the structure of Chemical Formula 1 has excellent adsorption performance with respect to the polymer surface exhibiting hydrophilicity compared to the compound having an A-C structure without the part ($B_1$-$B_2$), and thus effectively inhibits agglomeration of the super absorbent polymer particles.

In addition, when the hydrogel polymer is pulverized in the presence of the carboxylic acid-based additive, the hydrophobic functional group, part A, contained in the additive imparts hydrophobicity to the surface of the pulverized super absorbent polymer particles, thereby reducing frictional force between the particles and increasing bulk density of the super absorbent polymer. Further, the hydrophilic functional group, part C, contained in the additive is also bonded to the super absorbent polymer particles, so that surface tension of the polymer is not lowered. Accordingly, the super absorbent polymer composition including the carboxylic acid-based additive may exhibit higher bulk density while having an equivalent level of surface tension compared to a composition not including such an additive.

**The super absorbent polymer composition**

Hereinafter, the super absorbent polymer composition of one embodiment will be described in more detail for each component.

The super absorbent polymer composition of one embodiment includes a plurality of super absorbent polymer particles containing a cross-linked polymer of a water-soluble ethylene-based unsaturated monomer having at least partially neutralized acidic groups and an internal cross-linking agent. At this time, the cross-linked polymer is obtained by cross-linking polymerization of the water-soluble ethylene-based unsaturated monomer having at least partially neutralized acidic groups in the presence of an internal cross-linking agent, and has a three-dimensional network structure in which main chains formed by polymerization of the monomers are cross-linked by the internal cross-linking agent.

In other words, the super absorbent polymer composition of one embodiment includes a plurality of super absorbent polymer particles containing a cross-linked polymer of a water-soluble ethylene-based unsaturated monomer having at least partially neutralized acidic groups and an internal cross-linking agent. When the cross-linked polymer has a three-dimensional network structure in which main chains formed by polymerization of the monomers are cross-linked by the internal cross-linking agent, water retention capacity and absorbency under pressure, which are general physical properties of the super absorbent polymer, can be significantly improved compared to the case of having a two-dimensional linear structure that is not further cross-linked by the internal cross-linking agent.

The water-soluble ethylene-based unsaturated monomer may be any monomer commonly used in the preparation of a super absorbent polymer. As a non-limiting example, the water-soluble ethylene-based unsaturated monomer may be a compound represented by the following Chemical Formula 2:

[Chemical Formula 2] R-COOM'

in Chemical Formula 2,

R is a alkyl group having 2 to 5 carbon atoms containing an unsaturated bond, and
M' is a hydrogen atom, a monovalent or divalent metal, an ammonium group, or an organic amine salt.

Preferably, the monomer may be at least one selected from the group consisting of (meth)acrylic acid, and a monovalent (alkali)metal salt, a divalent metal salt, an ammonium salt and an organic amine salt of the acid.

When (meth)acrylic acid and/or a salt thereof is used as a water-soluble ethylene-based unsaturated monomer, it is advantageous to obtain a super absorbent polymer having improved absorption performance. In addition, maleic anhydride, fumaric acid, crotonic acid, itaconic acid, 2-acryloylethane sulfonic acid, 2-methacryloylethanesulfonic acid, 2-(meth)acryloylpropanesulfonic acid, 2-(meth)acrylamide-2-methyl propane sulfonic acid, (meth)acrylamide, N-substituted (meth)acrylate, 2-hydroxyethyl (meth)acrylate, 2-hydroxypropyl (meth)acrylate, methoxypolyethylene glycol (meth)acrylate, polyethylene glycol (meth)acrylate, (N,N)-dimethylaminoethyl (meth)acrylate, (N,N)-dimethylaminopropyl (meth)acrylamide, or the like may be used as the monomer.

Herein, the water-soluble ethylene-based unsaturated monomer may have acidic groups, and at least some of the acidic groups may be neutralized by a neutralizing agent. Specifically, in the step of mixing the water-soluble ethylene-based unsaturated monomer having acidic groups, the internal cross-linking agent, the polymerization initiator and the neutralizing agent, at least some of the acidic groups of the water-soluble ethylene-based unsaturated monomer may be neutralized. In this case, a basic substance such as sodium hydroxide, potassium hydroxide, and ammonium hydroxide capable of neutralizing acidic groups may be used as the neutralizing agent.

In addition, a degree of neutralization of the water-soluble ethylene-based unsaturated monomer may be 50 to 90 mol%, 60 to 85 mol%, 65 to 85 mol%, or 65 to 75 mol%, wherein the degree of neutralization refers to the degree to which the acidic groups contained in the water-soluble ethylene-based unsaturated monomer are neutralized by the neutralizing agent. A range of the degree of neutralization may vary depending on the final physical properties. An excessively high degree of neutralization causes the neutralized monomers to be precipitated, and thus polymerization may not readily occur. On the contrary, an excessively low degree of neutralization not only deteriorates absorbency of the polymer, but also gives the polymer hard-to-handle properties, such as those of an elastic rubber.

In addition, the terminology 'internal cross-linking agent' used herein is different from a surface cross-linking agent for cross-linking the surface of the super absorbent polymer particles to be described later, and the internal cross-linking agent polymerizes unsaturated bonds of the water-soluble ethylene-based unsaturated monomers by cross-linking. The cross-linking in the above step proceeds regardless of the surface or the inside, but when the surface cross-linking process of the super absorbent polymer particles to be described later is in progress, the surface of the particles of the finally prepared super absorbent polymer has a structure cross-linked by a surface cross-linking agent, and the inside of the particles has a structure cross-linked by the internal cross-linking agent.

As the internal cross-linking agent, any compound may be used as long as it allows the introduction of cross-linking bonds during polymerization of the water-soluble ethylene-based unsaturated monomer. As a non-limiting example, the internal cross-linking agent may be a multifunctional cross-linking agent such as N,N'-methylenebisacrylamide, trimethylolpropane tri(meth)acrylate, ethylene glycol di(meth)acrylate, polyethylene glycol (meth)acrylate, polyethylene glycol di(meth)acrylate, propylene glycol di(meth)acrylate, polypropylene glycol (meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentaacrylate, glycerin tri(meth)acrylate, pentaerythritol tetraacrylate, triarylamine, ethylene glycol diglycidyl ether, propylene glycol, glycerin, or ethylene carbonate, and theses may be used alone or in combination of two or more. However, the present disclosure is not limited thereto. Preferably, polyethylene glycol di(meth)acrylate may be used.

The cross-linking polymerization of the water-soluble ethylene-based unsaturated monomer in the presence of the internal cross-linking agent may be performed by thermal polymerization, photopolymerization or hybrid polymerization in the presence of a polymerization initiator with or without a thickener, a plasticizer, a preservation stabilizer, an antioxidant, etc., but the specific details will be described later.

The super absorbent polymer particles may have a particle diameter of about 150 to about 850 $\mu$m, and this particle diameter may be measured in accordance with EDANA WSP 220.3 by the European Disposables and Nonwovens Association (EDANA).

In addition, the super absorbent polymer composition includes the carboxylic acid-based additive. As described above, the additive is mixed with the hydrogel polymer so that the hydrogel polymer is easily pulverized without agglomeration. At this time, the carboxylic acid-based additive is at least one selected from the group consisting of a carboxylic acid represented by the Chemical Formula 1 and a metal salt thereof. Specifically, the carboxylic acid-based additive is at least one selected from the group consisting of a carboxylic acid represented by the Chemical Formula 1, an alkali metal salt of a carboxylic acid represented by the Chemical Formula 1, and an alkaline earth metal salt of a carboxylic acid represented by the Chemical Formula 1. More specifically, the carboxylic acid-based additive is one of a carboxylic acid represented by the Chemical Formula 1, an alkali metal salt of a carboxylic acid represented by the Chemical Formula 1, and an alkaline earth metal salt of a carboxylic acid represented by the Chemical Formula 1.

In the Chemical Formula 1, A is a hydrophobic moiety and may be a linear or branched alkyl group having 5 to 21 carbon atoms. However, the case where A is a linear alkyl group is more advantageous in terms of suppressing agglomeration of pulverized particles and improving dispersibility. When A is an alkyl group having less than 5 carbon atoms, there is a problem in that the chain is short, so that the agglomeration of pulverized particles cannot be effectively controlled. When A is an alkyl group having more than 21 carbon atoms, mobility of the additive may be reduced, so that the carboxylic acid-based additive may not be effectively mixed with the hydrogel polymer and the cost of the composition may increase due to an increase in the cost of the additive.

Specifically, in the Chemical Formula 1, A may be linear alkyl having 5 to 21 carbon atoms such as n-pentyl, n-hexyl, n-heptyl, n-octyl, n-nonyl, n-decanyl, n-undecanyl, n-dodecanyl, n-tridecanyl, n-tetradecanyl, n-pentadecanyl, n-hexadecanyl, n-heptadecanyl, n-octadecanyl, n-nonadecanyl, n-icosanyl, or n-heneicosanyl.

More specifically, A may be linear alkyl having 6 to 18 carbon atoms. For example, A may be $-C_6H_{13}$, $-C_{11}H_{23}$, $-C_{12}H_{25}$, $-C_{17}H_{35}$, or $-C_{18}H_{37}$.

In addition, part ($B_1$-$B_2$) of the Chemical Formula 1 improves adsorption performance with respect to the polymer surface, which may be insufficient only with the part C. When the number of carbon atoms of $B_2$ is 3 or more, the distance between part $B_1$ and part C increases, and the adsorption performance with respect to the hydrogel polymer may be deteriorated.

Herein, $R_1$ may be linear or branched alkyl having 1 to 4 carbon atoms. More specifically, $R_1$ may be methyl, ethyl, propyl, isopropyl, butyl, isobutyl, sec-butyl, or tert-butyl. Since the additive can be adsorbed on the super absorbent

polymer particles, it is advantageous that the molecular structure of the additive is not bulky, and thus $R_1$ may be methyl.

In addition, n of the Chemical Formula 1 is 1. n, which means the number of ($B_1$-$B_2$), is 1, considering that the part ($B_1$-$B_2$) is for reinforcing adsorption performance with respect to part C and how long a molecular length is required in order for the carboxylic acid-based additive to be effectively adsorbed on the hydrogel polymer.

Specifically, in the Chemical Formula 1, $B_1$ may be

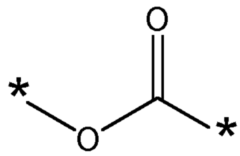

,

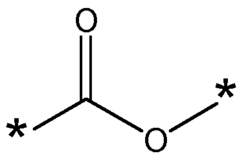

, or

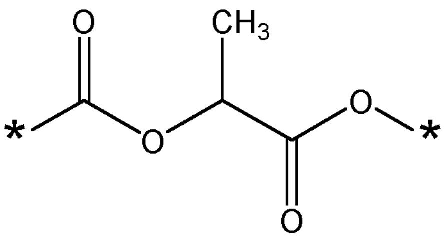

,

wherein * is a bonding site with a neighboring atom.

For example, $B_1$ may be

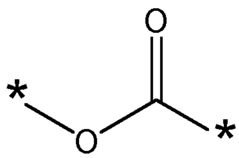

,

or

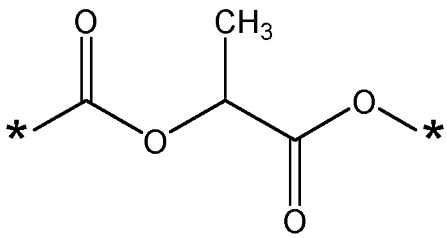

.

In addition, in the Chemical Formula 1, $B_2$ is

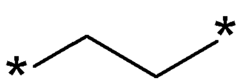

,

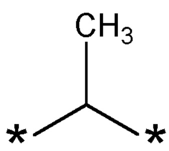

,

or,

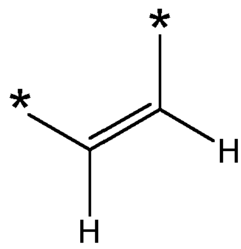

,

wherein * is a bonding site with a neighboring atom, in order to improve adsorption performance of the additive with respect to the cross-linked polymer together with part C.

In addition, in the Chemical Formula 1, part C is a carboxyl group (COOH) as a hydrophilic moiety, and when the carboxylic acid-based additive is a salt, the hydrophilic moiety is a carboxylate group ($COO^-$).

In other words, the carboxylic acid-based additive may be a compound represented by the following Chemical Formula 1a:

[Chemical Formula 1a]

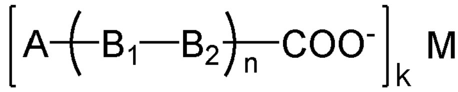

in Chemical Formula 1a,

M is $H^+$, a monovalent cation of an alkali metal, or a divalent cation of an alkaline earth metal,
k is 1 if M is $H^+$ or a monovalent cation of an alkali metal, and 2 if it is a divalent cation of an alkaline earth metal, and descriptions of A, $B_1$, $B_2$ and n are as defined in the Chemical Formula 1.

More specifically, when the carboxylic acid-based additive is an alkali metal salt of the carboxylic acid represented by the Chemical Formula 1, the additive may be represented by the following Chemical Formula 1':

[Chemical Formula 1']

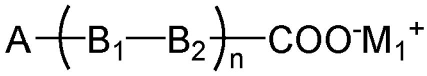

in Chemical Formula 1',

$M_1$ is an alkali metal such as sodium or potassium, and
descriptions of A, $B_1$, $B_2$ and n are as defined in the Chemical Formula 1.

In addition, when the carboxylic acid-based additive is an alkaline earth metal salt of the carboxylic acid represented by the Chemical Formula 1, the additive may be represented by the following Chemical Formula 1 ":

[Chemical Formula 1"]

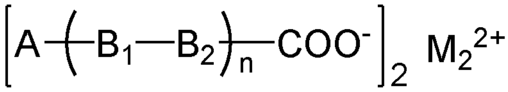

in Chemical Formula 1", $M_2$ is an alkaline earth metal such as calcium, and
descriptions of A, $B_1$, $B_2$ and n are as defined in the Chemical Formula 1.

For example, the carboxylic acid-based additive may be any one carboxylic acid selected from the group consisting of:

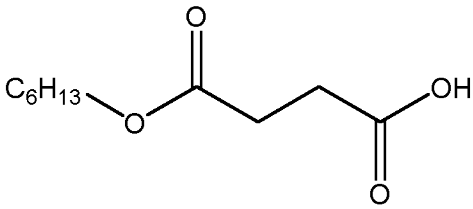

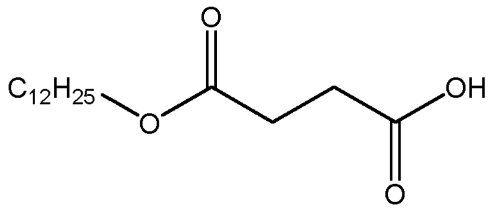

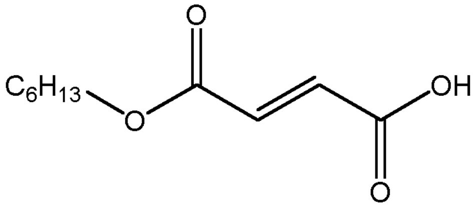

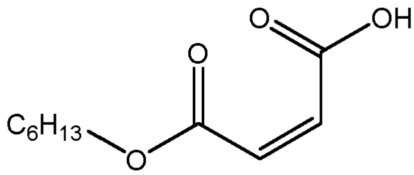

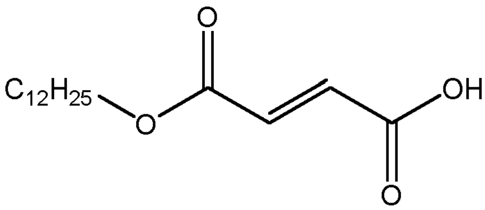

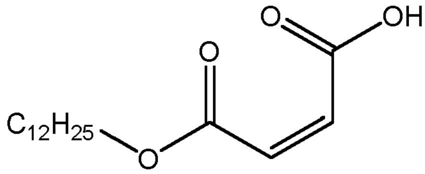

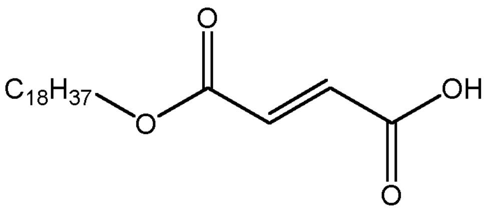

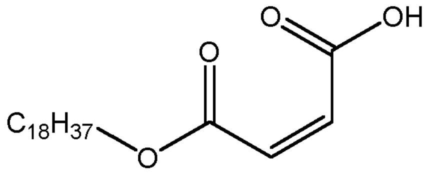

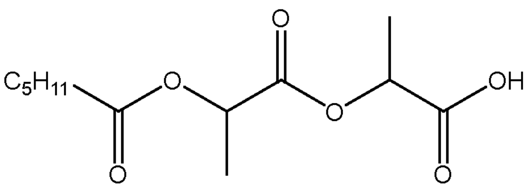

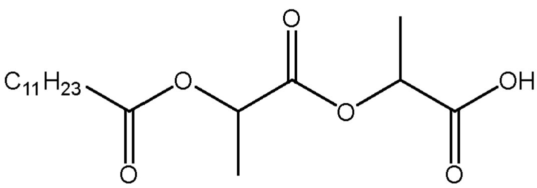

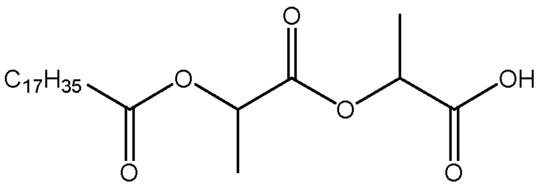

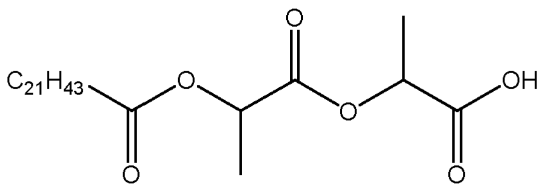

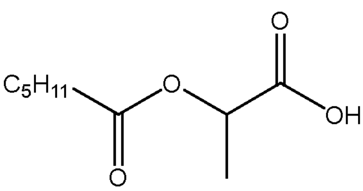

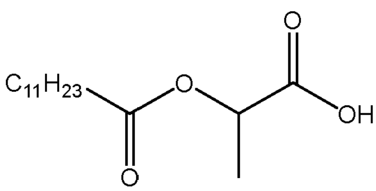

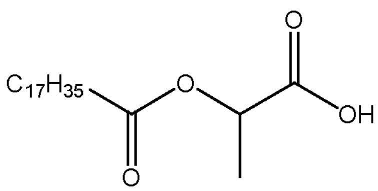
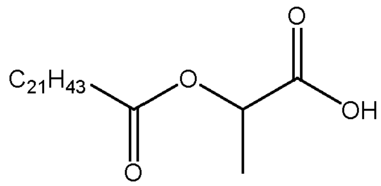

Alternatively, the carboxylic acid-based additive may be any one alkali metal salt selected from the group consisting of:

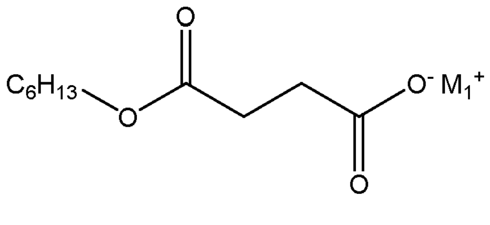
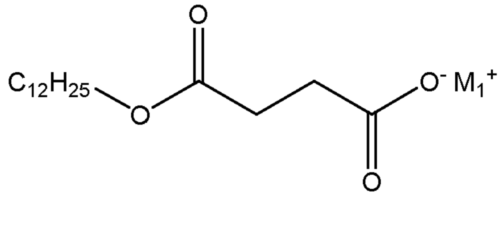

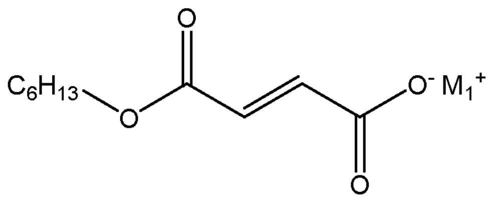
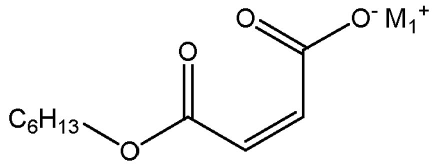

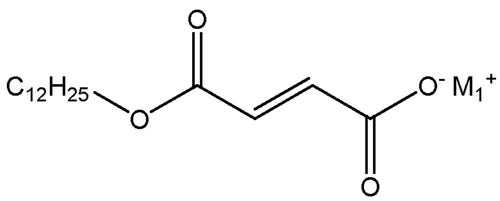
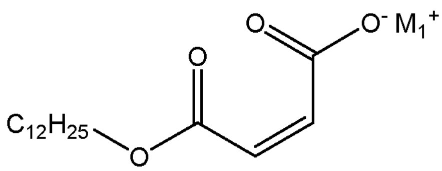

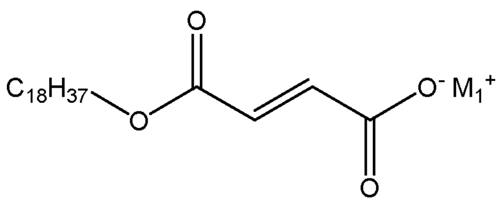
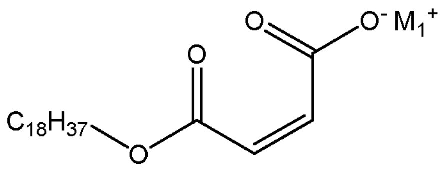

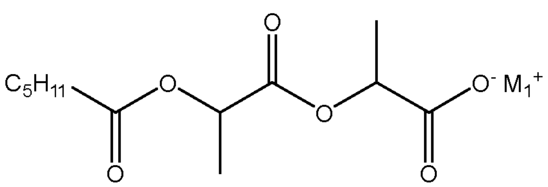
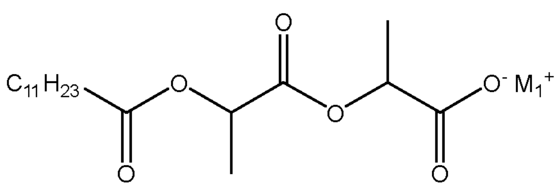

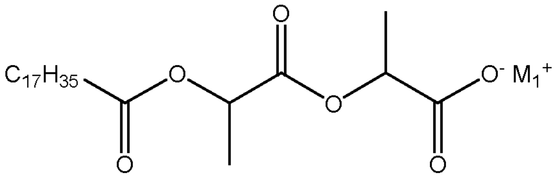
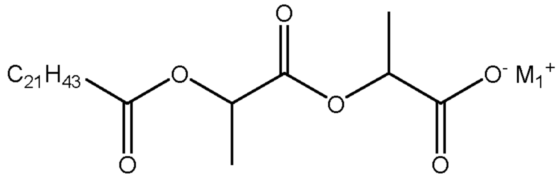
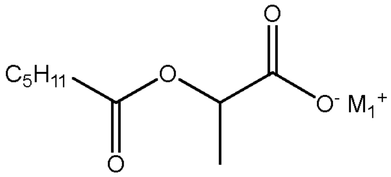
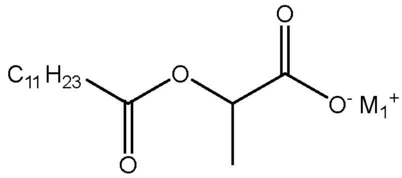
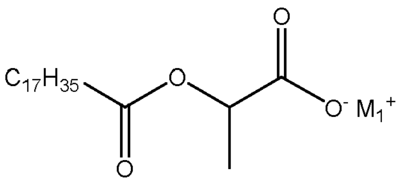
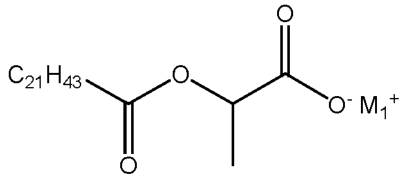

In the above,

$M_1$ is each independently an alkali metal.

Alternatively, the carboxylic acid-based additive may be any one alkaline earth metal salt selected from the group consisting of:

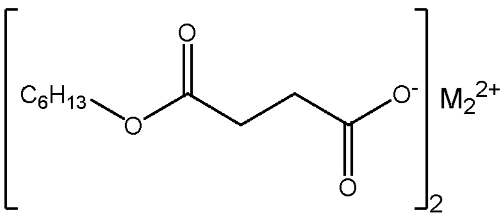
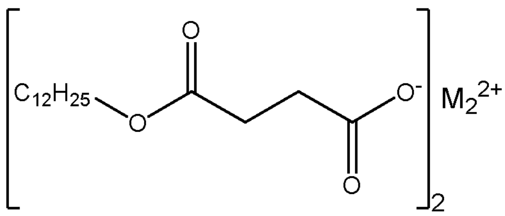
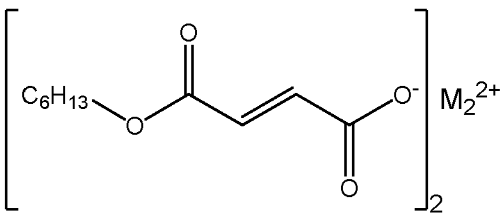
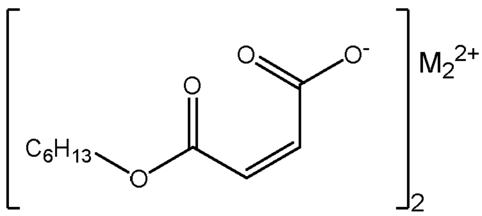
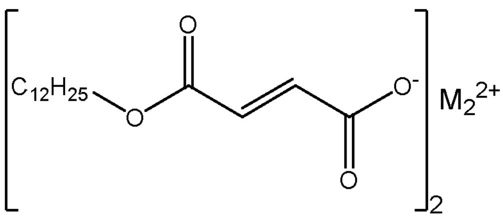
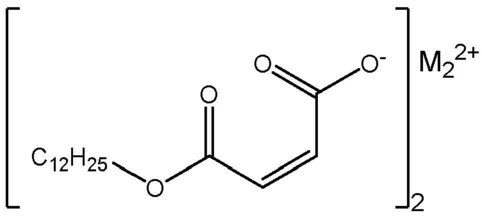
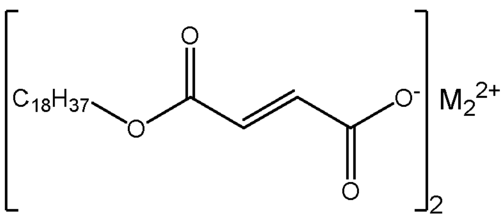
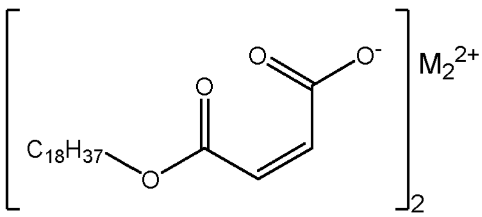

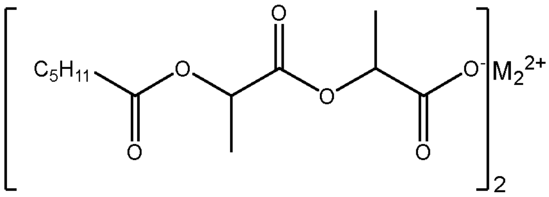

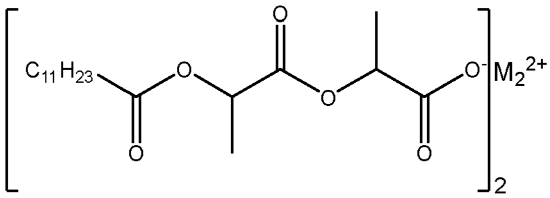

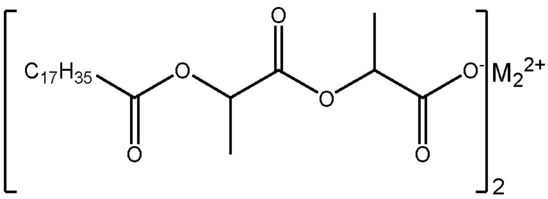

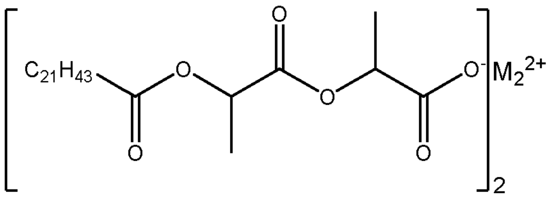

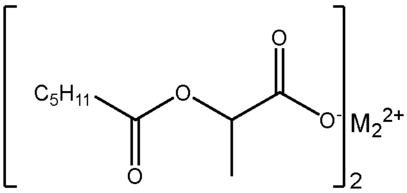

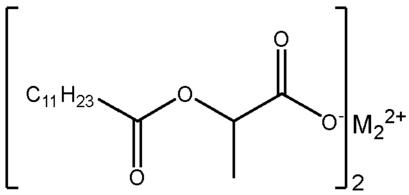

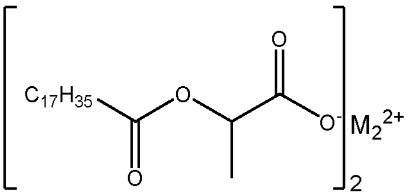

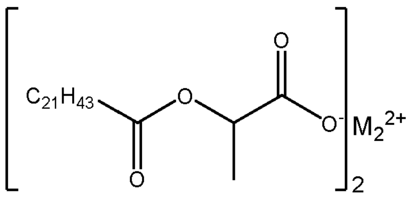

In the above,
$M_2$ is each independently an alkaline earth metal.

For example, the carboxylic acid-based additive may be any one of compounds represented by the following Chemical Formulae 1-1 to 1-7, but is not limited thereto:

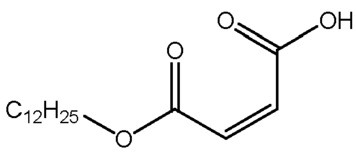

**1-1**

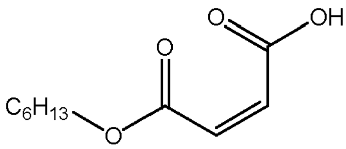

**1-2**

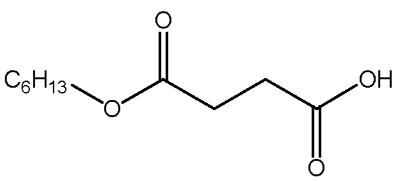

**1-3**

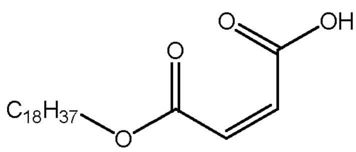

**1-4**

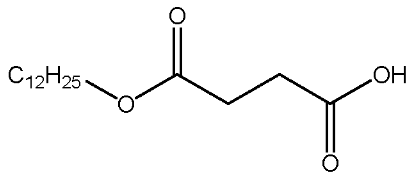

**1-5**

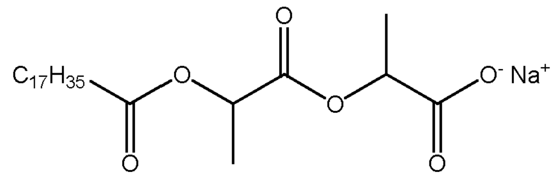

**1-6**

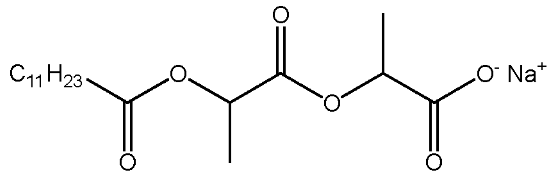

**1-7**

In addition, the super absorbent polymer composition may further include a compound formed by decomposing an ester bond of $B_1$ in the process of drying after the additive is pulverized with the hydrogel polymer, in addition to the carboxylic acid-based additive.

Specifically, when the additive is a compound in which n is 1 and $B_1$ is -OCO-, the super absorbent polymer composition may further include an alcohol having an A-OH structure and a compound having a HOOC-$B_2$-C structure.

In addition, when the additive is a compound in which n is 1 and $B_1$ is -COO-, the super absorbent polymer composition may further include a carboxylic acid having an A-COOH structure and a compound having a HO-$B_2$-C structure.

In addition, when the additive is a compound in which n is 1 and $B_1$ is -COOCH($R_1$)COO-, the super absorbent polymer composition may further include a carboxylic acid having an A-COOH structure and a compound having a HOCH($R_1$)COO-$B_2$-C structure.

As the super absorbent polymer composition further includes the compound formed by decomposing an ester bond in the additive molecule, mobility of the additives is increased, and a phenomenon of re-agglomeration after pulverization can be further prevented.

Herein, the carboxylic acid-based additive is included in an amount of 0.01 to 10 wt% based on the total weight of the super absorbent polymer composition. When the content of the additive in the composition is too low, the effect of controlling agglomeration by the additive is small, and thus super absorbent polymer particles not pulverized to a desired particle diameter may be included. When the content of the additive is too high, water retention capacity and absorbency under pressure, which are general physical properties of the super absorbent polymer, may be deteriorated.

The content of the additive in the super absorbent polymer composition may be measured by analyzing the content of the additive dissolved in the solution part after adding 1 g of the super absorbent polymer composition to 1 ml of distilled water, sufficiently mixing for 1 hour until swelling, and then filtering to extract only the solution part, followed by HPLC analysis.

More specifically, the carboxylic acid-based additive may be included in an amount of 0.01 wt% or more, 0.02 wt% or more, 0.05 wt% or more, 0.1 wt% or more, or 0.5 wt% or more, and 10 wt% or less, 8 wt% or less, 5 wt% or less, 3 wt% or less, 2 wt% or less, or 1 wt% or less, based on the total weight of the super absorbent polymer composition.

Meanwhile, at least some of the carboxylic acid-based additive may be present on a surface of the super absorbent polymer particles. Herein, "at least some of the additive is present on a surface of the super absorbent polymer particles" means that at least some of the additive is adsorbed or bonded on the surface of the super absorbent polymer particles. Specifically, the additive may be physically or chemically adsorbed on the surface of the super absorbent polymer. More specifically, the hydrophilic functional group of the additive may be physically adsorbed on the hydrophilic moiety of the surface of the super absorbent polymer by an intermolecular force such as dipole-dipole interaction. In this way, the hydrophilic moiety of the additive is physically adsorbed on the surface of the super absorbent polymer particles to surround the surface, and the hydrophobic moiety of the additive is not adsorbed on the surface of the polymer particles, so the polymer particles may be coated with the additive in the form of a micelle structure.

Therefore, when at least some of the carboxylic acid-based additive is present on a surface of the super absorbent polymer particles, agglomeration between pulverized particles in the preparation of the super absorbent polymer composition may be more effectively suppressed, compared to the case where all of the carboxylic acid-based additive is present inside the super absorbent polymer particles, specifically, inside the cross-linked polymer.

In addition, as at least some of the carboxylic acid-based additive is present on a surface of the super absorbent

polymer particles, the super absorbent polymer composition including the carboxylic acid-based additive may have similar or higher surface tension with higher bulk density compared to a composition not including the additive.

Meanwhile, when the super absorbent polymer composition does not further include a surface cross-linked layer to be described later, other hydrophilic additives other than the plurality of super absorbent polymer particles, the carboxylic acid-based additive and a hydrolyzate of the additive generated by hydrolysis of the additive during the preparation of the super absorbent polymer may not be included.

Specifically, the super absorbent polymer composition of the embodiment does not include a compound having a glucose unit containing a plurality of hydroxyl groups in the molecule such as microcrystalline cellulose. For example, when the super absorbent polymer composition includes microcrystalline cellulose having an average particle diameter of 1 to 10 μm such as AVICEL® PH-101 represented by the following Chemical Formula 3 available from FMC, agglomeration between super absorbent polymer particles may not be suppressed due to the plurality of hydroxyl groups, and thus the effect by the above-described additive may not be effectively expressed.

[Chemical Formula 3]

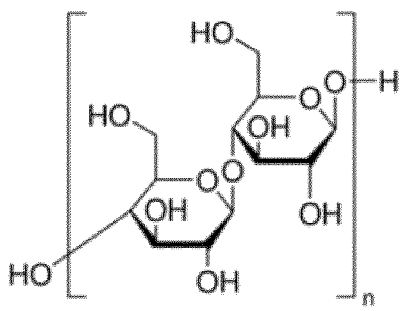

In addition, the super absorbent polymer composition of the embodiment may not include a hydrophilic additive such as polyethylene glycol, polypropylene glycol, poly(ethylene glycol)-poly(propylene glycol) copolymer, polyoxyethylene lauryl ether carboxylic acid, sodium polyoxyethylene lauryl ether carboxylate, lauryl sulfate, sodium lauryl sulfate, and the like. Since such additives do not have the part ($B_1$-$B_2$) of Chemical Formula 1 in the molecule, they are not sufficiently adsorbed on the surface of the cross-linked polymer, so that agglomeration between super absorbent polymer particles is not effectively suppressed. Accordingly, when the super absorbent polymer composition includes the hydrophilic additive as described above instead of the carboxylic acid-based additive, agglomeration between particles after pulverization of the cross-linked polymer is not suppressed, so that the super absorbent polymer composition contains a large amount of fine powder and exhibits low water retention capacity and low bulk density.

Meanwhile, the super absorbent polymer composition may further include a surface cross-linked layer formed by further cross-linking the cross-linked polymer using a surface cross-linking agent on at least a part of the surface of the super absorbent polymer particles. This is to increase the surface cross-linking density of the super absorbent polymer particles. When the super absorbent polymer particles further include a surface cross-linked layer as described above, they may have a structure having higher cross-linking density on the outside than inside.

As the surface cross-linking agent, any surface cross-linking agent that has been conventionally used in the preparation of a super absorbent polymer may be used without any particular limitation. Examples of the surface cross-linking agent may include at least one polyol selected from the group consisting of ethylene glycol, propylene glycol, 1,3-propanediol, 1,4-butanediol, 1,6-hexanediol, 1,2-hexanediol, 1,3-hexanediol, 2-methyl-1,3-propanediol , 2,5-hexanediol, 2-methyl-1,3-pentanediol, 2-methyl-2,4-pentanediol, tripropylene glycol and glycerol; at least one carbonate-based compound selected from the group consisting of ethylene carbonate, propylene carbonate, and glycerol carbonate; an epoxy compound such as ethylene glycol diglycidyl ether; an oxazoline compound such as oxazolidinone; a polyamine compound; an oxazoline compound; a mono-, di- or poly-oxazolidinone compound; a cyclic urea compound; and the like.

Specifically, as the surface cross-linking agent, one or more, two or more, or three or more of the aforementioned surface cross-linking agents may be used. For example, ethylene carbonate-propylene carbonate (ECPC), propylene glycol and/or glycerol carbonate may be used.

In addition, about 90 wt% or more, preferably 95 wt% or more of the super absorbent polymer composition based on the total weight may be super absorbent polymer particles having a particle diameter of about 150 to 850 μm, and less than about 10 wt%, preferably less than 5 wt% may be fine powder having a particle diameter of less than about 150 μm.

In addition, the super absorbent polymer composition may have centrifuge retention capacity (CRC) of 38 g/g or more, 39 g/g or more, or 40 g/g or more, and 45 g/g or less, 44 g/g or less, or 43 g/g or less, when measured in

accordance with the EDANA method WSP 241.3.

In addition, the super absorbent polymer composition may have absorbency under pressure (AUP) at 4.8 kPa (= 0.7 psi) of 20 g/g or more, 23 g/g or more, or 24 g/g or more, and 28 g/g or less, 27 g/g or less, or 26 g/g or less, when measured in accordance with the EDANA method WSP 242.3.

In addition, the super absorbent polymer composition may have a bulk density of 0.69 to 0.73 g/ml. At this time, for measuring the bulk density, about 100 g of the super absorbent polymer composition was put into a funnel-type bulk density measuring device, flowed down into a 100 ml container, and the weight of the super absorbent polymer contained in the container was measured. That is, the bulk density is calculated as (weight of super absorbent polymer composition)/(container volume, 100 ml). More specifically, the super absorbent polymer composition may have a bulk density of 0.70 to 0.72 g/ml.

In addition, the super absorbent polymer composition may have a surface tension of 68 mN/m or more and less than 72 mN/m. At this time, the surface tension may be measured for the brine containing swollen super absorbent polymer after adding 0.5 g of the super absorbent polymer to 40 mL of 0.9% saline, followed by stirring at 350 rpm for 3 minutes using a surface tension meter.

**The preparation method of** a **super absorbent polymer**

Meanwhile, the super absorbent polymer composition may be prepared including the steps of: forming a hydrogel polymer by cross-linking polymerization of a water-soluble ethylene-based unsaturated monomer having at least partially neutralized acidic groups in the presence of an internal cross-linking agent and a polymerization initiator; preparing a pulverized product containing hydrous super absorbent polymer particles and the additive by mixing the hydrogel polymer with the carboxylic acid-based additive, followed by pulverization; and preparing a super absorbent polymer composition containing super absorbent polymer particles and the additive by drying the pulverized product.

Hereinafter, the preparation method of a super absorbent polymer of one embodiment will be described in more detail for each step.

In the preparation method of a super absorbent polymer of one embodiment, a step of forming a hydrogel polymer by cross-linking polymerization of a water-soluble ethylene-based unsaturated monomer having at least partially neutralized acidic groups in the presence of an internal cross-linking agent and a polymerization initiator is first performed.

The step may consist of a step of preparing a monomer composition by mixing the water-soluble ethylene-based unsaturated monomer, an internal cross-linking agent, and a polymerization initiator, and a step of forming a hydrogel polymer by thermal polymerization or photopolymerization of the monomer composition. For details on the water-soluble ethylene-based unsaturated monomer and the internal cross-linking agent, refer to the above.

In the monomer composition, the internal cross-linking agent may be used in an amount of 0.01 to 5 parts by weight based on 100 parts by weight of the water-soluble ethylene-based unsaturated monomer. For example, the internal cross-linking agent may be used in an amount of 0.01 parts by weight or more, 0.05 parts by weight or more, or 0.1 parts by weight or more, and 5 parts by weight or less, 3 parts by weight or less, 2 parts by weight or less, 1 parts by weight or less, or 0.7 parts by weight or less based on 100 parts by weight of the water-soluble ethylene-based unsaturated monomer. When too little internal cross-linking agent is used, cross-linking does not occur sufficiently, and thus it may be difficult to achieve strength above an appropriate level, and when too much internal cross-linking agent is used, the internal cross-linking density increases, and thus it may be difficult to achieve a desired level of water retention capacity.

In addition, the polymerization initiator may be properly selected depending on the polymerization method. In the case of a thermal polymerization, a thermal polymerization initiator is used, and in the case of a photopolymerization, a photopolymerization initiator is used. Further, in the case of a hybrid polymerization method (a method using both heat and light), all of the thermal polymerization initiator and the photopolymerization initiator can be used. However, even by the photopolymerization method, a certain amount heat is generated by UV radiation and the like, and some heat occurs as the polymerization reaction, an exothermal reaction, progresses. Therefore, the composition may additionally include the thermal polymerization initiator.

Herein, any compound which can form a radical by light such as UV rays may be used as the photopolymerization initiator without limitation.

For example, the photopolymerization initiator may be one or more compounds selected from the group consisting of benzoin ether, dialkyl acetophenone, hydroxyl alkylketone, phenyl glyoxylate, benzyl dimethyl ketal, acyl phosphine, and $\alpha$-aminoketone. Further, specific examples of the acyl phosphine include diphenyl(2,4,6-trimethylbenzoyl)phosphine oxide, phenylbis(2,4,6-trimethylbenzoyl)phosphine oxide, ethyl(2,4,6-trimethylbenzoyl)phenylphosphinate, and the like. More various photopolymerization initiators are well disclosed in "UV Coatings: Basics, Recent Developments and New Application (Elsevier, 2007)" written by Reinhold Schwalm, p 115, and the present disclosure is not limited thereto.

Furthermore, as the thermal polymerization initiator, one or more initiators selected from the group consisting

of a persulfate-based initiator, an azo-based initiator, hydrogen peroxide, and ascorbic acid may be used. Specifically, sodium persulfate ($Na_2S_2O_8$), potassium persulfate ($K_2S_2O_8$), ammonium persulfate ($(NH_4)_2S_2O_8$), and the like may be used as examples of the persulfate-based initiators; and 2,2-azobis(2-amidinopropane) dihydrochloride, 2,2-azobis-(N,N-dimethylene)isobutyramidine dihydrochloride, 2-(carbamoylazo)isobutylonitril, 2,2-azobis[2-(2-imidazolin-2-yl)propane] dihydrochloride, 4,4-azobis-(4-cyanovaleric acid), and the like may be used as examples of the azo-based initiators. More various thermal polymerization initiators are well disclosed in 'Principle of Polymerization (Wiley, 1981)' written by Odian, p 203, and the present disclosure is not limited thereto.

The polymerization initiator may be used in an amount of 2 parts by weight or less based on 100 parts by weight of the water-soluble ethylene-based unsaturated monomer. When the concentration of the polymerization initiator is excessively low, the polymerization rate becomes slow, and a large amount of residual monomers may be extracted from the final product. Conversely, when the concentration of the polymerization initiator is higher than the above range, polymer chains forming a network are shortened, so that the content of extractable components increases and absorbency under pressure decreases, thereby lowering physical properties of the polymer.

The monomer composition may further include an additive such as a thickener, a plasticizer, a preservation stabilizer, an antioxidant, and the like, if necessary.

In addition, the monomer composition containing the monomer may be, for example, in the form of a solution dissolved in a solvent such as water. The solid content of the monomer composition in a solution state, that is, the concentration of the monomer, the internal cross-linking agent, and the polymerization initiator may be appropriately adjusted in consideration of the polymerization time and reaction conditions. For example, the solid content of the monomer composition may be 10 to 80 wt%, 15 to 60 wt%, or 30 to 50 wt%.

When the monomer composition has the solid content in the above range, it may be advantageous for controlling the pulverization efficiency during pulverization of the polymer to be described later while eliminating the need to remove unreacted monomers after polymerization by using a gel effect phenomenon occurring in the polymerization reaction of a high-concentration aqueous solution.

At this time, any solvent which can dissolve the above components may be used without limitation. For example, the solvent may be in combination of at least one selected from water, ethanol, ethyleneglycol, diethyleneglycol, triethyleneglycol, 1,4-butanediol, propyleneglycol, ethyleneglycol monobutylether, propyleneglycol monomethylether, propyleneglycol monomethylether acetate, methylethylketone, acetone, methylamylketone, cyclohexanone, cyclopentanone, diethyleneglycol monomethylether, diethyleneglycol ethylether, toluene, xylene, butyrolactone, carbitol, methylcellosolve acetate, and N,N-dimethylacetamide.

Meanwhile, the cross-linking polymerization of a water-soluble ethylene-based unsaturated monomer having at least partially neutralized acidic groups may be performed without any particular limitation, as long as the hydrogel polymer can be formed by thermal polymerization, photopolymerization, or hybrid polymerization.

Specifically, the polymerization method is largely divided into thermal polymerization and photopolymerization depending on an energy source of the polymerization. In the case of thermal polymerization, it is generally carried out in a reactor equipped with an agitation spindle, such as a kneader. In the case of photopolymerization, it is generally carried out in a reactor equipped with a movable conveyor belt, or in a container with a flat bottom. However, the above-mentioned polymerization method is merely an example, and the present disclosure is not limited thereto.

For example, a hydrogel polymer may be obtained by supplying hot air to the reactor with an agitation spindle such as a kneader or heating the reactor to perform thermal polymerization. The hydrogel polymer thus obtained may have a size of several centimeters to several millimeters, according to the shape of the agitation spindle equipped in the reactor. Specifically, the size of the obtained hydrogel polymer may vary depending on the concentration and injection speed of the monomer composition injected thereto, and a hydrogel polymer having a weight average particle diameter of 2 to 50 mm may be obtained.

Further, when the photopolymerization is carried out in a reactor equipped with a movable conveyor belt or in a container with a flat bottom as described above, the obtained hydrogel polymer may be usually a sheet-like hydrogel polymer having a width of the belt. In this case, the thickness of the polymer sheet may vary depending on the concentration, injection speed or injection amount of the monomer composition to be injected, but usually, it is preferable to feed the monomer composition such that a sheet-like polymer having a thickness of about 0.5 to about 5 cm can be obtained. When the monomer composition is fed such that the thickness of the sheet-like polymer becomes too thin, the production efficiency is low, which is undesirable. When the thickness of the sheet-like polymer is greater than 5 cm, the polymerization reaction cannot be evenly carried out over the entire thickness because of the excessive thickness.

At this time, the hydrogel polymer thus obtained may have a moisture content of 40 to 70 wt%. For example, the moisture content of the hydrogel polymer may be 40 wt% or more, 45 wt% or more, or 50 wt% or more, and 70 wt% or less, 65 wt% or less, or 60 wt% or less. When the moisture content of the hydrogel polymer is too low, it is difficult to secure an appropriate surface area in the subsequent pulverizing step, and there is a concern that the drying efficiency may decrease. When the moisture content of the hydrogel polymer is too high, the pressure received in the subsequent pulverizing step increases, so that absorbency under pressure may decrease, and there is a concern that a lot of energy

and a long time may be required in the drying step after pulverization.

Meanwhile, the "moisture content" in the present description is the content of moisture in the entire weight of the hydrogel polymer, and it means a value of which the weight of the dried polymer is subtracted from the weight of the hydrogel polymer. Specifically, the moisture content is defined as a value calculated by the weight loss due to moisture evaporation from the polymer in the process of increasing the temperature of the crumb polymer for drying through infrared heating. At this time, the drying conditions for measuring the moisture content are as follows: the temperature is increased to about 180 °C and maintained at 180 °C, and the total drying time is 40 min including 5 min of a heating step.

Subsequently, a step of preparing a pulverized product containing hydrous super absorbent polymer particles and the additive by mixing the hydrogel polymer with the carboxylic acid-based additive, followed by pulverization is performed. For details on the additive, refer to the above.

In a conventional preparation method of a super absorbent polymer, the hydrogel polymer is coarsely pulverized, dried, and then pulverized to a desired particle diameter in a dried state to prepare a super absorbent polymer. In this case, a large amount of fine powder having a particle diameter of less than 150 μm may be generated due to pulverization in a dried state. Accordingly, there is a problem that a classification process for classifying the produced super absorbent polymer particles according to the particle diameter is necessarily required.

However, when the pulverization is performed with the additive having the structure of Chemical Formula 1 in the state of the hydrogel polymer as described above, it is possible to prepare a group of particles having a desired particle diameter without agglomeration of the pulverized particles. Accordingly, the preparation method of a super absorbent polymer composition according to one embodiment does not require a pulverizing process and a classification process after drying, thereby greatly reducing the manufacturing cost of the super absorbent polymer.

In the above step, the carboxylic acid-based additive is added to be included in an amount of 0.01 to 10 wt% based on the total weight of the super absorbent polymer composition. This may be implemented by using the carboxylic acid-based additive in an amount of about 0.01 to about 10 parts by weight based on 100 parts by weight of the hydrogel polymer. However, since the ester bond of $B_1$ may be decomposed in the process of pulverization and drying after the formation of the hydrogel polymer, the amount of the additive added and the amount of the additive remaining in the final super absorbent polymer composition may not be the same. When too little additive is used, the additive may not be evenly adsorbed on the surface of the hydrogel polymer, resulting in re-agglomeration of the particles after pulverization, and when too much additive is used, the overall physical properties of the final super absorbent polymer may decrease.

The method of mixing the additive with the hydrogel polymer is not particularly limited, and may be appropriately selected as long as it is a method capable of evenly mixing the additive with the hydrogel polymer.

For example, the additive may be mixed in the form of a solution dissolved in a solvent, specifically in water. At this time, a method of putting the additive in the form of a solution and the hydrogel polymer in a reaction tank for mixing, a method of spraying the solution after putting the hydrogel polymer in a mixer, a method of continuously supplying the hydrogel polymer and the solution to a continuously operating mixer for mixing, or the like may be used.

A pulverized product containing hydrous super absorbent polymer particles and the additive may be prepared by mixing the hydrogel polymer with the additive, followed by pulverization. Specifically, the pulveriziation step may be performed such that the pulverized hydrous super absorbent polymer particles have a particle diameter of 150 μm to 850 μm. Herein, the "hydrous super absorbent polymer particles" are particles having a moisture content of about 40 wt% or more. Since they are particles in which the hydrogel polymer is pulverized into particles without a drying process, they may have a moisture content of 40 to 70 wt%, like the hydrogel polymer.

Herein, the pulverizing machine used for pulverization is not particularly limited. Specifically, it may include at least one selected from the group consisting of a vertical pulverizer, a turbo cutter, a turbo grinder, a rotary cutter mill, a cutter mill, a disc mill, a shred crusher, a crusher, a chopper, and a disc cutter, but the present disclosure is not limited thereto.

Alternatively, a pin mill, a hammer mill, a screw mill, a roll mill, a disc mill, or a jog mill may be also used as the pulverizing machine, but the present disclosure is not limited thereto.

Meanwhile, at least some of the additive contained in the pulverized product may be present on a surface of the hydrous super absorbent polymer particles. As describe above, "at least some of the additive is present on a surface of the hydrous super absorbent polymer particles" means that at least some of the additive is adsorbed or bonded on the surface of the hydrous super absorbent polymer particles. This is because the carboxylic acid-based additive is not added during the polymerization process of the water-soluble ethylene-based unsaturated monomer, but is added after the polymer is formed. Accordingly, the phenomenon of re-agglomeration between the hydrous super absorbent polymer particles may be suppressed, compared to the case where the additive is added during the polymerization process and present inside the polymer.

Subsequently, a step of preparing a super absorbent polymer composition containing super absorbent polymer particles and the additive by drying the pulverized product is performed. Particularly, it is possible to prepare a super absorbent polymer composition containing super absorbent polymer particles having desired general physical properties

even without an additional pulverizing step after drying of the pulverized product.

Drying of the pulverized product may be performed such that the moisture content of each of the plurality of super absorbent polymer particles contained in the prepared super absorbent polymer composition is about 10 wt% or less, specifically, about 0.1 to about 10 wt%.

At this time, the drying temperature may be about 60 °C to about 250 °C. When the drying temperature is too low, the drying time may become excessively long, and when the drying temperature is too high, only the surface of the polymer is dried and the physical properties of the final super absorbent polymer may decrease. Therefore, the drying process may be preferably carried out at a temperature of about 100 °C to about 240 °C, more preferably at a temperature of about 110 °C to about 220 °C.

Furthermore, the drying time may be about 20 minutes to about 12 hours in consideration of process efficiency. For example, it may be dried for about 10 minutes to about 100 minutes, or about 20 minutes to about 60 minutes.

The drying method in the drying step is not particularly limited if it has been generally used in the drying process. Specifically, the drying step may be carried out by the method of hot air provision, infrared radiation, microwave radiation, UV ray radiation, and the like.

The super absorbent polymer composition prepared as described above may contain less than about 10 wt%, more specifically less than about 5 wt% of fine powder having a particle diameter of less than 150 μm based on the total weight, in addition to the plurality of super absorbent polymer particles and the additive. This is in contrast to having fine powder of about 10 wt% to about 20 wt% when the hydrogel polymer is dried and then pulverized to prepare a super absorbent polymer.

Thereafter, if necessary, a step of forming a surface cross-linked layer on at least a part of the surface of the super absorbent polymer particles in the presence of a surface cross-linking agent may be further included. By the above step, the cross-linked polymer included in the super absorbent polymer particles may be further cross-linked with a surface cross-linking agent, so that a surface cross-linked layer may be formed on at least a part of the surface of the super absorbent polymer particles.

This surface cross-linking agent may be used in an amount of about 0.001 to about 5 parts by weight based on 100 parts by weight of the super absorbent polymer particles. For example, the surface cross-linking agent may be used in an amount of 0.005 parts by weight or more, 0.01 parts by weight or more, or 0.05 parts by weight or more, and 5 parts by weight or less, 4 parts by weight or less, or 3 parts by weight or less based on 100 parts by weight of the super absorbent polymer particles. By adjusting the content of the surface cross-linking agent within the above-described range, a super absorbent polymer having excellent absorption properties can be prepared.

In addition, the step of forming the surface cross-linked layer may be performed by adding an inorganic material in addition to the surface cross-linking agent. That is, in the presence of the surface cross-linking agent and the inorganic material, the step of forming a surface cross-linked layer by further cross-linking the surface of the super absorbent polymer particles may be performed.

As the inorganic material, at least one inorganic material selected from the group consisting of silica, clay, alumina, silica-alumina composite, titania, zinc oxide and aluminum sulfate may be used. The inorganic material may be used in a powdery form or in a liquid form, and in particular, alumina powder, silica-alumina powder, titania powder, or nanosilica solution may be used. In addition, the inorganic material may be used in an amount of about 0.001 to about 1 parts by weight based on 100 parts by weight of the super absorbent polymer particles.

In addition, the method of mixing the surface cross-linking agent with the super absorbent polymer composition is not particularly limited. For example, a method of adding the surface cross-linking agent and the super absorbent polymer composition in a reactor for mixing, a method of spraying the surface cross-linking agent onto the super absorbent polymer composition, or a method of mixing the super absorbent polymer composition and the surface cross-linking agent while continuously providing them to a continuously operating mixer may be used.

When mixing the surface cross-linking agent and the super absorbent polymer composition, water and methanol may be further mixed therewith. When water and methanol are added thereto, there is an advantage that the surface cross-linking agent may be evenly dispersed in the super absorbent polymer composition. At this time, amounts of water and methanol to be added may be properly controlled for the purposes of inducing a uniform dispersion of the surface cross-linking agent, preventing an agglomeration phenomenon of the super absorbent polymer composition, and optimizing a surface penetration depth of the surface cross-linking agent.

The surface cross-linking process may be performed at a temperature of about 80 °C to about 250 °C. More specifically, the surface cross-linking process may be performed at a temperature of about 100 °C to about 220 °C, or about 120 °C to about 200 °C , for about 20 minutes to about 2 hours, or about 40 minutes to about 80 minutes. When the above-described surface cross-linking conditions are satisfied, the surface of the super absorbent polymer particles is sufficiently cross-linked to increase absorbency under pressure.

The heating means for the surface cross-linking reaction is not particularly limited. It is possible to provide a thermal media thereto or provide a heat source directly thereto. At this time, usable thermal media may be a heated fluid such as steam, hot air, hot oil, and the like, but the present invention is not limited thereto. Furthermore, the temperature

of the thermal media provided thereto may be properly selected in consideration of the means of the thermal media, heating speed, and target temperature of heating. Meanwhile, an electric heater or a gas heater may be used as the heat source provided directly, but the present invention is not limited thereto.

Hereinafter, the present invention will be described in more detail with reference to examples. However, these examples are for illustrative purposes only, and the invention is not intended to be limited by these examples.

**Examples - Preparation of super absorbent polymer composition**

**Example 1**

100 g (1.388 mol) of acrylic acid, 0.16 g of polyethylene glycol diacrylate (Mn=508) as an internal cross-linking agent, 0.008 g of diphenyl (2,4,6-trimethylbenzoyl)phosphine oxide as a photopolymerization initiator, 0.12 g of sodium persulfate as a thermal polymerization initiator and 123.5 g of a 32% caustic soda solution were mixed in a 3L glass container equipped with a stirrer and a thermometer at room temperature to prepare a monomer composition (degree of neutralization of acrylic acid: 70 mol%, solid content: 45 wt%).

Thereafter, the monomer composition was supplied at 500 to 2000 mL/min on a conveyor belt in which a belt having a width of 10 cm and a length of 2 m rotates at a speed of 50 cm/min. And, at the same time as the monomer composition was supplied, ultraviolet rays having an intensity of 10 $mW/cm^2$ were irradiated to perform a polymerization reaction for 60 seconds, thereby obtaining a hydrogel polymer having a moisture content of 55 wt%.

Subsequently, monolauryl maleate represented by the following Chemical Formula 1-1 was added to the hydrogel polymer obtained by the above polymerization reaction in the form of an aqueous solution in hot water such that the content was 1 parts by weight based on 100 parts by weight of the hydrogel polymer. Then, the mixture was pulverized into particles having a particle diameter of 150 μm to 850 μm using a meat chopper. Herein, the monolauryl maleate represented by the following Chemical Formula 1-1 was prepared by mixing maleic acid anhydride and 1-dodecanol in a molar ratio of 1:1, followed by reacting at 60 °C for 3 hours, and the moisture content of hydrous super absorbent polymer particles contained in the final pulverized product was 55 wt%.

Thereafter, the pulverized product was dried by flowing hot air at 185 °C from the bottom to the top for 20 minutes, and then flowing from the top to the bottom for 20 minutes using a convection oven capable of changing wind direction up and down to prepare a super absorbent polymer.

[Chemical Formula 1-1]

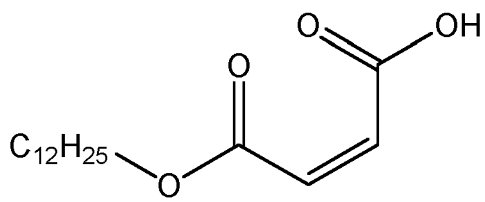

Subsequently, a mixed solution containing 4.8 g of water, 0.1 g of propylene glycol, 0.8 g of ethylene carbonate, 0.8 g of propylene carbonate, and 0.87 g of a 23% aluminum sulfate aqueous solution was added to 100 g of the obtained super absorbent polymer, followed by mixing for 2 minutes. Thereafter, this was dried at 185 °C for 60 minutes to prepare a final super absorbent polymer composition.

**Example 2**

A super absorbent polymer composition was prepared in the same manner as in Example 1, except that monohexyl maleate represented by the following Chemical Formula 1-2 was used instead of the monolauryl maleate represented by Chemical Formula 1-1. Herein, the monohexyl maleate represented by the following Chemical Formula 1-2 was prepared by mixing maleic acid anhydride and 1-hexanol in a molar ratio of 1:1, followed by reacting at 60 °C for 3 hours.

[Chemical Formula 1-2]

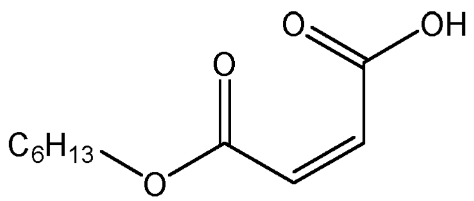

**Example 3**

A super absorbent polymer composition was prepared in the same manner as in Example 1, except that monohexyl succinate represented by the following Chemical Formula 1-3 was used instead of the monolauryl maleate represented by Chemical Formula 1-1. Herein, the monohexyl succinate represented by the following Chemical Formula 1-3 was prepared by mixing succinic acid anhydride and 1-hexanol in a molar ratio of 1:1, followed by reacting at 60 °C for 3 hours.

[Chemical Formula 1-3]

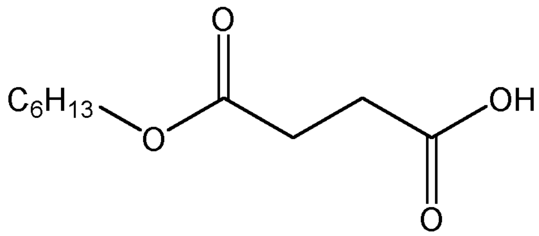

**Example 4**

A super absorbent polymer composition was prepared in the same manner as in Example 1, except that monostearyl maleate represented by the following Chemical Formula 1-4 was used instead of the monolauryl maleate represented by Chemical Formula 1-1. Herein, the monostearyl maleate represented by the following Chemical Formula 1-4 was prepared by mixing maleic acid anhydride and stearyl alcohol in a molar ratio of 1:1, followed by reacting at 80 °C for 3 hours.

[Chemical Formula 1-4]

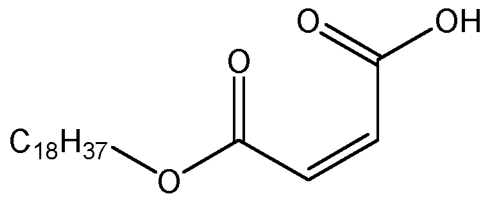

**Example 5**

A super absorbent polymer composition was prepared in the same manner as in Example 1, except that monolauryl succinate represented by the following Chemical Formula 1-5 was used instead of the monolauryl maleate represented by Chemical Formula 1-1. Herein, the monolauryl succinate represented by the following Chemical Formula 1-5 was prepared by mixing succinic acid anhydride and 1-dodecanol in a molar ratio of 1:1, followed by reacting at 110 °C for 3 hours.

[Chemical Formula 1-5]

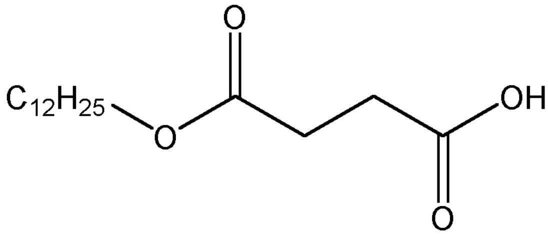

**Example 6**

A super absorbent polymer composition was prepared in the same manner as in Example 1, except that sodium stearoyl-2-lactylate (Almax-6900, manufactured by Ilshinwells) represented by the following Chemical Formula 1-6 was used instead of the monolauryl maleate represented by Chemical Formula 1-1.

[Chemical Formula 1-6]

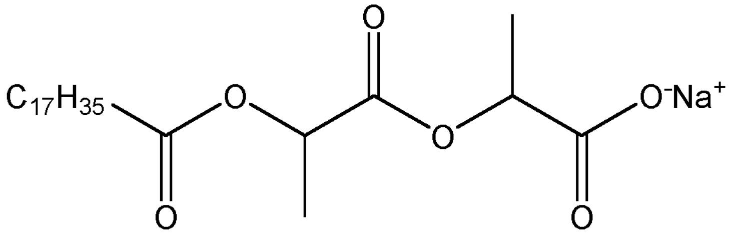

**Example 7**

A super absorbent polymer composition was prepared in the same manner as in Example 1, except that sodium lauroyl-2-lactylate (manufactured by Ilshinwells) represented by the following Chemical Formula 1-7 was used instead of the monolauryl maleate represented by Chemical Formula 1-1.

[Chemical Formula 1-7]

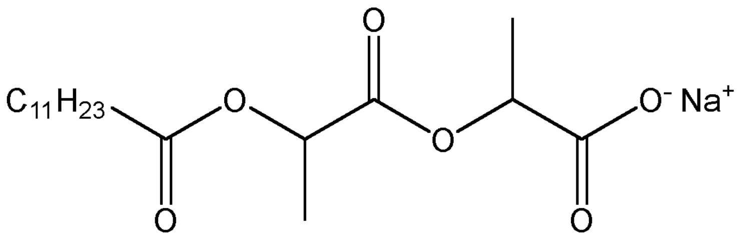

**Example 8**

A super absorbent polymer composition was prepared in the same manner as in Example 1, except that 0.1 parts by weight of monolauryl maleate represented by Chemical Formula 1-1 based on 100 parts by weight of the hydrogel polymer was used.

**Comparative Example 1**

A super absorbent polymer composition was prepared in the same manner as in Example 1, except that monolauryl maleate represented by Chemical Formula 1-1 was not used.

**Comparative Example 2**

A super absorbent polymer composition was prepared in the same manner as in Example 1, except that dodecanoic acid (manufactured by Sigma Aldrich) represented by the following Chemical Formula X-1 was used instead of the monolauryl maleate represented by Chemical Formula 1-1.

[Chemical Formula X-1]

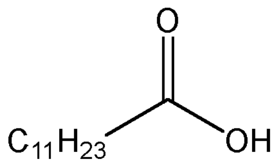

**Comparative Example 3**

A super absorbent polymer composition was prepared in the same manner as in Example 1, except that stearic acid (manufactured by Sigma Aldrich) represented by the following Chemical Formula X-2 was used instead of the monolauryl maleate represented by Chemical Formula 1-1.

[Chemical Formula X-2]

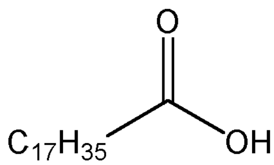

**Comparative Example 4**

A super absorbent polymer composition was prepared in the same manner as in Example 1, except that a nonionic surfactant compound (PLURONIC® L35, manufactured by BASF) represented by the following Chemical Formula X-3 was used instead of the monolauryl maleate represented by Chemical Formula 1-1.

[Chemical Formula X-3] $HO\text{-}(EO)_{11}\text{-}(PO)_{16}\text{-}(EO)_{11}\text{-}H$

in Chemical Formula X-3,
EO is ethylene oxide, and PO is propylene oxide.

**Comparative Example 5**

A super absorbent polymer composition was prepared in the same manner as in Example 1, except that monobutyl maleate represented by the following Chemical Formula X-4 was used instead of the monolauryl maleate represented by Chemical Formula 1-1. Herein, the monobutyl maleate represented by the following Chemical Formula X-4 was prepared by mixing maleic acid anhydride and 1-butanol in a molar ratio of 1:1, followed by reacting at 60 °C for 3 hours.

[Chemical Formula X-4]

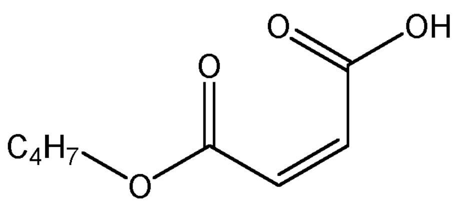

**Comparative Example 6**

A super absorbent polymer composition was prepared in the same manner as in Example 1, except that monobehenyl maleate represented by the following Chemical Formula X-5 was used instead of the monolauryl maleate represented by Chemical Formula 1-1. Herein, the monobehenyl maleate represented by the following Chemical Formula X-5 was prepared by mixing maleic acid anhydride and 1-docosanol in a molar ratio of 1:1, followed by reacting at 80 °C for 3 hours.

[Chemical Formula X-5]

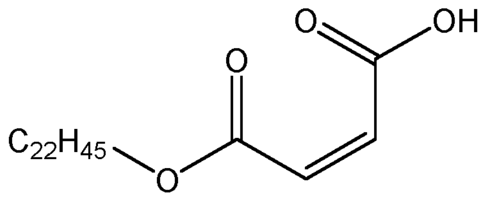

**Comparative Example 7**

A super absorbent polymer composition was prepared in the same manner as in Example 1, except that monolauryl glutarate represented by the following Chemical Formula X-6 was used instead of the monolauryl maleate represented by Chemical Formula 1-1. Herein, the monolauryl glutarate represented by the following Chemical Formula X-6 was prepared by mixing glutaric anhydride and 1-dodetanol in a molar ratio of 1:1, followed by reacting at 80 °C for 3 hours.

[Chemical Formula X-6]

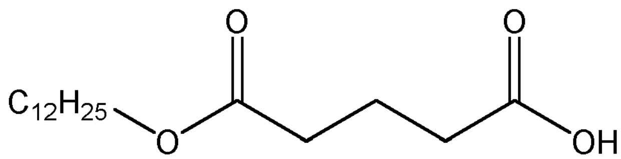

**Comparative Example 8**

A super absorbent polymer composition was prepared in the same manner as in Example 1, except that sodium polyoxyethylene(3) lauryl ether carboxylate (LCA-30D, manufactured by Sanyo chemical) represented by the following Chemical Formula X-7 was used instead of the monolauryl maleate represented by Chemical Formula 1-1.

[Chemical Formula X-7]

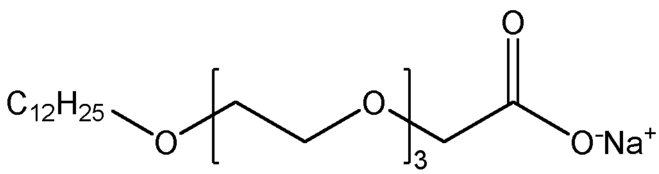

**Comparative Example 9**

A super absorbent polymer composition was prepared in the same manner as in Example 1, except that sodium lauryl sulphate represented by the following Chemical Formula X-8 was used instead of the monolauryl maleate represented by Chemical Formula 1-1.

[Chemical Formula X-8]

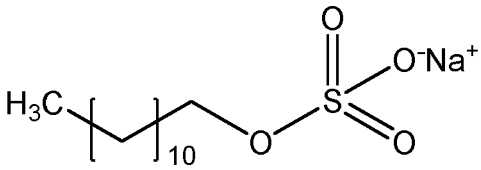

**Reference Example 1**

A super absorbent polymer composition was prepared in the same manner as in Example 1, except that 11 parts by weight of monolauryl maleate represented by Chemical Formula 1-1 based on 100 parts by weight of the hydrogel polymer was used.

**Experimental Example 1**

The super absorbent polymer composition prepared in one of Example 1, Example 6 and Comparative Example 1 was subjected to high-performance liquid chromatography (HPLC) to measure the content of additives contained in the composition, respectively, and the results are shown in Table 1 below. In addition, graphs of high-performance liquid chromatography (HPLC) for the super absorbent polymer compositions prepared in Example 1 and Comparative Example 1 are shown in FIG. 1.

① After adding 1 ml of distilled water to 1.0±0.0001 g of the final super absorbent polymer composition, it was sufficiently swelled for 1 hour.
② 6 mL of a solvent (MeOH:Methylene chloride = 2:1 v/v) was added to the swollen super absorbent polymer composition, followed by filtering after 4 hours to extract only a solution part, which was used as a sample solution.
③ The content of the additive dissolved in the sample solution was quantified by passing the sample solution through high-performance liquid chromatography (HPLC) to determine the content of residual material.

At this time, the measurement conditions of high-performance liquid chromatography (HPLC) are as follows:

- Column: Acquity BEH $C_{18}$ (2.1 mm I.D. × 50 mm L, particle size: 1.7 μm)
- Mobile phase A: ACN (Acetonitrile(0.1% trifluoroacetic acid))
- Mobile phase B: D.I Water (0.1% trifluoroacetic acid)
- Column temp.: 40 °C
- Flow rate: 0.4 mL/min

[Table 1]

| | Additive | | | | | Additive content 1) (wt%) |
|---|---|---|---|---|---|---|
| | Type | A | $B_1$ | $B_2$ | C | |
| Example 1 | 1-1 | $C_{12}H_{25}$ | -OCO- | -CH=CH- | COO H | 0.0715 |
| Example 6 | 1-6 | $C_{17}H_{35}$ | -COOCH(CH $_3$) COO- | -CH($CH_3$)- | $COO^-$ $Na^+$ | 0.0866 |
| Comp. Example 1 | - | - | | | | 0 |

1) wt% based on the total weight of the super absorbent polymer composition

Referring to Table 1 and FIG. 1, it was confirmed that monolauryl maleate represented by Chemical Formula 1-1 was present in the super absorbent polymer composition prepared in Example 1, unlike the super absorbent polymer composition prepared in Comparative Example 1. Specifically, the monolauryl maleate represented by Chemical Formula 1-1 was confirmed at a retention time of 9.515 minutes when measured under the above measurement conditions with high-performance liquid chromatography (HPLC).

**Experimental Example 2**

For the super absorbent polymer compositions prepared in Examples and Comparative Examples, particle agglomeration characteristics, centrifuge retention capacity (CRC), absorbency under pressure (AUP), surface tension, bulk density and an amount of fine powder generated were measured in the following manner, and the results are shown in Table 3 below. In addition, photographs of the agglomeration evaluation results of the super absorbent polymer compositions prepared in Example 2, Example 6, Comparative Example 1 and Comparative Example 4 are shown in FIGs. 2, 3, 4, and 5, respectively.

(1) Evaluation of particle agglomeration characteristics

① After taking out 20 g of the hydrogel polymer prepared in one of Examples and Comparative Examples, it was cut into 6 equal parts such that at least one edge of 2 cm or more was included using scissors. Next, the carboxylic acid-based additive or a comparative compound corresponding thereto was mixed in the form of an aqueous solution according to the type and content used in one of Examples and Comparative Examples.
② The mixture was pulverized for 15 seconds at 7200 rpm using a homomixer.
(3) The pulverized product was evaluated visually under the evaluation criteria in Table 2 below.

[Table 2]

| Evaluation | Criteria |
|---|---|
| X | 6 or more particles of 2 cm or more, or not pulverized |
| Δ | 1 to 5 particles of 2 cm or more |
| ○ | No particles of 2 cm or more, but not uniformly pulverized |
| ◎ | No particles of 2 cm or more, and uniformly pulverized |

(2) Centrifuge retention capacity (CRC)

The centrifuge retention capacity by absorption ratio under a non-loading condition of each polymer composition was measured according to the EDANA (European Disposables and Nonwovens Association) WSP 241.3 method.
Specifically, a polymer composition was obtained by classifying each of the polymer compositions prepared in Examples and Comparative Examples through a sieve of #30-50. After inserting $W_0$ (g, about 0.2 g) of the polymer composition uniformly in a nonwoven fabric envelope and sealing the same, it was soaked in saline (0.9 wt%) at room temperature. After 30 minutes, the envelope was centrifuged at 250G for 3 minutes to drain, and the weight $W_2$ (g) of the envelope was measured. Further, after carrying out the same operation without using the polymer, the weight $W_1$ (g) of the envelope was measured.
Then, CRC (g/g) was calculated by using the obtained weight values according to the following Equation 2.

[Equation 2]

$$CRC\ (g/g) = \{[W_2(g) - W_1(g)]/W_0(g)\} - 1$$

(3) Absorbency under pressure (AUP)

The absorbency under pressure at 4.8 kPa (= 0.7 psi) of the super absorbent polymer compositions prepared in Examples and Comparative Examples was measured according to the EDANA WSP 242.3 method.
First, in the measurement of the absorbency under pressure, the classified polymer of the above CRC measurement was used.
Specifically, a 400 mesh stainless steel screen was installed in a cylindrical bottom of a plastic having an inner diameter of 25 mm. $W_0$ (g, 0.16 g) of the super absorbent polymer composition was uniformly scattered on the screen at room temperature and a humidity of 50%. Thereafter, a piston which can uniformly provide a load of 4.8 kPa (= 0.7 psi) was placed on the composition. Herein, the outer diameter of the piston was slightly smaller than 25 mm, there was

no gap with the inner wall of the cylinder, and jig-jog of the cylinder was not interrupted. At this time, the weight $W_3$ (g) of the device was measured.

Subsequently, a glass filter having a diameter of 90 mm and a thickness of 5 mm was placed in a petri dish having a diameter of 150 mm, and saline (0.9 wt% sodium chloride) was poured in the dish. At this time, the saline was poured until the surface level of the saline became equal to the upper surface of the glass filter. One sheet of filter paper with a diameter of 90 mm was placed thereon. After the measuring device was placed on the filter paper, the liquid was absorbed for 1 hour under a load. After 1 hour, the measuring device was lifted, and the weight $W_4$ (g) was measured.

Then, absorbency under pressure (g/g) was calculated by using the obtained weight values according to the following Equation 3.

[Equation 3]

$$AUP(g/g) = [W_4(g) - W_3(g)]/W_0(g)$$

(4) Surface tension (S/T)

In order to measure the surface tension of the super absorbent polymer compositions prepared in Examples and Comparative Examples, 0.5 g of each super absorbent polymer composition was added to 40 mL of 0.9% saline, and stirred at 350 rpm for 3 minutes. After stopping the stirring, brine containing swollen super absorbent polymer was obtained. Using the brine as a sample, the surface tension of each super absorbent polymer composition was measured with a surface tension meter (product name: Force Tensiometer-K100, manufactured by KRUSS).

(5) Bulk density (BD)

100 g of the super absorbent polymer composition prepared in one of Examples and Comparative examples flowed through an orifice of a standard fluidity measuring device and placed in a container with a volume of 100 ml. Thereafter, the super absorbent polymer composition was cut so as to be horizontal, and the volume of the super absorbent polymer composition was adjusted to 100 ml. Then, the weight of only the super absorbent polymer composition excluding the container was measured. The weight of only the super absorbent polymer composition was then divided by 100 ml, which is the volume of the super absorbent polymer composition, to obtain the bulk density corresponding to the weight of the super absorbent polymer composition per unit volume.

(6) Amount of fine powder generated

The amount of fine powder generated in the super absorbent polymer composition prepared in one of Examples and Comparative Examples was calculated as a ratio of the weight of the polymer having a particle diameter of less than 150 μm to the total weight after passing the prepared super absorbent polymer composition through a coarse pulverizer (2800 rpm, 0.4 mm clearance, 1 mm lower mesh condition) once.

[Table 3]

| | Additive | | | | | Particle agglomeration characteristics | SAP properties | | | | |
|---|---|---|---|---|---|---|---|---|---|---|---|
| | Type | A | $B_1$ | $B_2$ | C | | CRC (g/g) | AUP (g/g) | S/T (mN/ m) | BD (g/ml) | Amt. of fine powder generated (%) |
| Ex. 1 | 1-1 | $C_{12}H_{25}$ | -OCO- | -CH=CH- | COO H | ○ | 42.3 | 24.2 | 71.2 | 0.71 | 4.1 |
| Ex. 2 | 1-2 | $C_6H_{13}$ | -OCO- | -CH=CH- | COO H | ◎ | 420 | 24.8 | 71.7 | 0.72 | 3.6 |
| Ex. 3 | 1-3 | $C_6H_{13}$ | -OCO- | $-CH_2CH_2-$ | COO H | ◎ | 41.2 | 24.9 | - | - | 3.8 |
| Ex. 4 | 1-4 | $C_{18}H_{37}$ | -OCO- | -CH=CH- | COO H | ○ | 41.0 | 24.5 | 70.1 | 0.71 | 4.1 |
| Ex. 5 | 1-5 | $C_{12}H_{25}$ | -OCO- | $-CH_2CH_2-$ | COO H | ○ | 40.1 | 25.0 | - | - | 3.6 |
| Ex. 6 | 1-6 | $C_{17}H_{35}$ | $-COOCH(CH_3)COO-$ | $-CH(CH_3)-$ | $COO^-Na^+$ | ○ | 40.8 | 24.6 | 68.9 | 0.71 | 4.1 |
| Ex. 7 | 1-7 | $C_{11}H_{23}$ | $-COOCH(CH_3)COO-$ | $-CH(CH_3)-$ | $COO^-Na^+$ | ○ | 41.2 | 24.1 | - | - | 4.5 |
| Ex. 8 | 1-1 | $C_{12}H_{25}$ | -OCO- | -CH=CH- | COO H | ○ | 41.3 | 24.3 | 70.4 | 0.72 | 3.9 |
| Comp. Ex. 1 | - | | | | | X | 36.7 | 24.3 | 71.3 | 0.68 | 14.5 |
| Comp. Ex. 2 | X-1 | $C_{11}H_{23}$ | - | - | COO H | X | 36.2 | 24.2 | 69.8 | 0.67 | 17.2 |
| Comp. Ex. 3 | X-2 | $C_{17}H_{35}$ | - | - | COO H | X | 37.1 | 23.5 | - | - | 16.8 |
| Comp. Ex. 4 | X-3 | $HO-(EO)_{11}-(PO)_{16}-(EO)_{11}-H$ | | | | △ | 37.5 | 24.0 | - | - | 11.7 |
| Comp. Ex. 5 | X-4 | $C_4H_7$ | -OCO- | -CH=CH- | COO H | X | 37.3 | 24.0 | - | - | 15.1 |
| Comp. Ex. 6 | X-5 | $C_{22}H_{45}$ | -OCO- | -CH=CH- | COO H | X | 36.7 | 24.4 | - | - | 14.5 |
| Comp. Ex. 7 | X-6 | $C_{12}H_{25}$ | -OCO- | $-C_3H_6-$ | COO H | X | 35.8 | 24.7 | 68.9 | 0.68 | 16.2 |
| Comp. Ex. 8 | X-7 | Sodium polyoxyethylene(3) lauryl ether carboxylate | | | | X | 37.1 | 24.0 | - | - | 14.8 |

(continued)

| | Additive | | | | | Partic le agglo merat ion chara cterist ics | SAP properties | | | | |
|---|---|---|---|---|---|---|---|---|---|---|---|
| | Typ e | A | $B_1$ | $B_2$ | C | | CRC (g/g) | AUP (g/g) | S/T (mN/ m) | BD (g/ml) | Amt. of fine powd er gener ated (%) |
| Comp. Ex. 9 | X-8 | sodium lauryl sulphate | | | | X | 37.2 | 24.2 | 69.6 | 0.68 | 15.0 |
| Ref. Ex. 1 | 1-1 | $C_{12}H_{25}$ | -OCO- | -CH=CH- | COO H | ○ | 40.0 | 22.3 | - | - | 4.3 |

Referring to Table 3 and FIGs. 2 to 5, when preparing a super absorbent polymer composition by adding the carboxylic acid-based additive to the hydrogel polymer, agglomeration between particles after pulverization is suppressed, compared to the case where the additive is not used or a compound that does not meet the structure is used. Thus, it can be seen that it is possible to prepare a composition including super absorbent polymer particles having a desired particle diameter without an additional pulverization process after drying, and accordingly, the amount of fine powder generated is reduced.

In addition, it can be seen that the super absorbent polymer composition including the carboxylic acid-based additive exhibited high bulk density without lowering surface tension while having water retention capacity and absorbency under pressure similar to or higher than the super absorbent polymer composition not including the above additive, or including a compound that does not meet the structure of the above additive.

In particular, it can be seen that the super absorbent polymer compositions of Examples 1, 2 and 4 suppressed agglomeration between particles after pulverization, and improved water retention capacity, unlike the super absorbent polymer composition of Comparative Example 5 in which the number of carbon atoms of A in Chemical Formula 1 is less than 5 and the super absorbent polymer composition of Comparative Example 6 in which the number of carbon atoms of A is greater than 21.

In addition, the super absorbent polymer composition of Example 5, not only suppressed agglomeration between particles after pulverization, but also improved water retention capacity, absorbency under pressure, surface tension, and bulk density, which are physical properties of the super absorbent polymer composition, compared to the super absorbent polymer composition of Comparative Example 7 in which $B_2$ of Chemical Formula 1 is propylene.

## Claims

1. A super absorbent polymer composition comprising

super absorbent polymer particles containing a cross-linked polymer of a water-soluble ethylene-based unsaturated monomer having at least partially neutralized acidic groups and an internal cross-linking agent; and
a carboxylic acid-based additive,
wherein the carboxylic acid-based additive is at least one selected from the group consisting of a carboxylic acid represented by the following Chemical Formula 1 and a salt thereof:

[Chemical Formula 1]

$$A-(B_1-B_2)_n-C$$

in Chemical Formula 1,

A is alkyl having 5 to 21 carbon atoms,
$B_1$ is -OCO-, -COO-, or -COOCH($R_1$)COO-,
$B_2$ is -

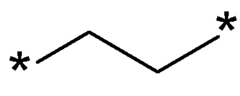 , 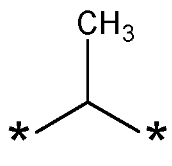 , or 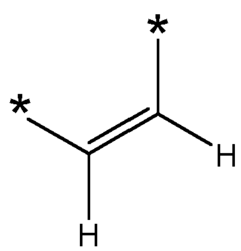 ,

wherein * is a bonding site with a neighboring atom,
wherein $R_1$ is alkyl having 1 to 4 carbon atoms,
n is 1, and
C is a carboxyl group
wherein the carboxylic acid-based additive is included in an amount of 0.01 to 10 wt% based on a total

weight of the super absorbent polymer composition, and
wherein the super absorbent polymer composition does not include a compound having a glucose unit containing a plurality of hydroxyl groups in the molecule,
wherein a super absorbent polymer composition is excluded which comprises
super absorbent polymer particles containing a cross-linked polymer of a water-soluble ethylene-based unsaturated monomer having at least partially neutralized acidic groups and a cross-linking agent;
hydrophobic particles; and
a carboxylic acid-based additive,
wherein the carboxylic acid-based additive is at least one selected from the group consisting of a carboxylic acid represented by the following Chemical Formula 4 and a salt thereof:

[Chemical Formula 4]

$$A-(EO)_m-(B_1-B_2)_n-C$$

in Chemical Formula 4,

A is alkyl having 5 to 21 carbon atoms,
EO is ethylene oxide ($-CH_2CH_2O-$),
m is 0,
$B_1$ is -OCO-, -COO-, or $-COOCH(R_1)COO-$,

wherein $R_1$ is alkyl having 1 to 5 carbon atoms,

$B_2$ is alkylene having 1 to 5 carbon atoms, alkenylene having 2 to 5 carbon atoms, or alkynylene having 2 to 5 carbon atoms,
n is an integer of 1 to 3, and
C is a carboxyl group.

**2.** The super absorbent polymer composition of Claim 1,
wherein at least some of the carboxylic acid-based additive is present on a surface of the super absorbent polymer particles.

**3.** The super absorbent polymer composition of Claim 1, wherein in Chemical Formula 1,
A is $-C_6H_{13}$, $-C_{11}H_{23}$, $-C_{12}H_{25}$, $-C_{17}H_{35}$, or $-C_{18}H_{37}$.

**4.** The super absorbent polymer composition of Claim 1, wherein in Chemical Formula 1,

$B_1$ is

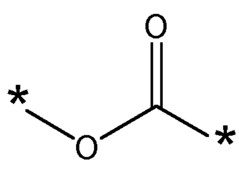, or 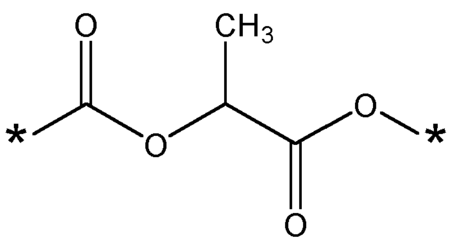,

wherein * is a bonding site with a neighboring atom.

**5.** The super absorbent polymer composition of Claim 1,
wherein the carboxylic acid-based additive is at least one selected from the group consisting of a carboxylic acid represented by the Chemical Formula 1, an alkali metal salt thereof, and an alkaline earth metal salt thereof.

**6.** The super absorbent polymer composition of Claim 1,

wherein the carboxylic acid-based additive is any one of compounds represented by the following Chemical Formulae 1-1 to 1-7:

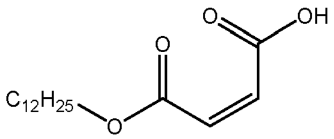

**1-1**

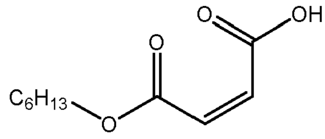

**1-2**

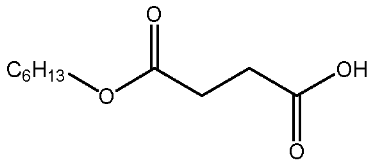

**1-3**

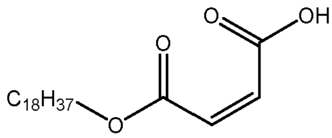

**1-4**

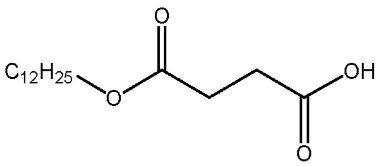

**1-5**

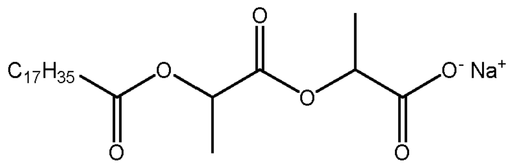

**1-6**

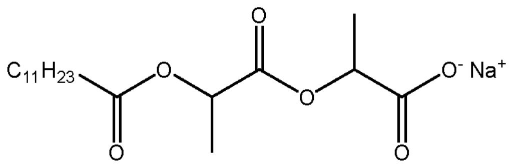

**1-7**

**7.** The super absorbent polymer composition of Claim 1, further comprising a surface cross-linked layer formed by further cross-linking the cross-linked polymer using a surface cross-linking agent on at least a part of the surface of the super absorbent polymer particles.

**Patentansprüche**

**1.** Superabsorbierende Polymerzusammensetzung, umfassend superabsorbierende Polymerpartikel, die ein vernetztes Polymer eines wasserlöslichen ungesättigten Monomers auf Ethylenbasis, das zumindest teilweise neutralisierte saure Gruppen aufweist, und ein internes Vernetzungsmittel enthalten; und
ein Additiv auf Carbonsäurebasis,
wobei das Additiv auf Carbonsäurebasis zumindest eines ist, das aus der Gruppe ausgewählt ist, die aus einer Carbonsäure, die durch die folgende chemische Formel 1 dargestellt ist, und einem Salz davon besteht:

[Chemische Formel 1]

$$A-(B_1-B_2)_n-C$$

wobei in der chemischen Formel 1

A Alkyl mit 5 bis 21 Kohlenstoffatomen ist,
$B_1$ -OCO-, -COO- oder -COOCH($R_1$)COO- ist,
B2

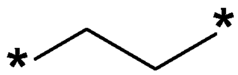 , 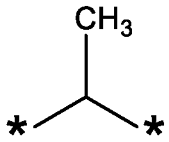 oder 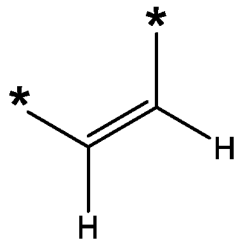

ist,
wobei * eine Bindungsstelle mit einem benachbarten Atom ist,
wobei $R_1$ Alkyl mit 1 bis 4 Kohlenstoffatomen ist,
n 1 ist und
C eine Carboxylgruppe ist,
wobei das Additiv auf Carbonsäurebasis in einer Menge von 0,01 bis 10 Gew.-%, bezogen auf ein Gesamtgewicht der superabsorbierenden Polymerzusammensetzung, enthalten ist und
wobei die superabsorbierende Polymerzusammensetzung keine Verbindung mit einer Glucoseeinheit, die eine Vielzahl von Hydroxylgruppen im Molekül enthält, enthält,
wobei eine superabsorbierende Polymerzusammensetzung ausgeschlossen ist, die
superabsorbierende Polymerpartikel, die ein vernetztes Polymer eines wasserlöslichen ungesättigten Monomers auf Ethylenbasis, das zumindest teilweise neutralisierte saure Gruppen aufweist, und ein Vernetzungsmittel enthalten;
hydrophobe Partikel und
ein Additiv auf Carbonsäurebasis umfasst,
wobei das Additiv auf Carbonsäurebasis zumindest eines ist, das aus der Gruppe ausgewählt ist, die aus einer Carbonsäure, die durch die folgende chemische Formel 4 dargestellt ist, und einem Salz davon besteht:

[Chemische Formel 4]

$$A-(EO)_m-(B_1-B_2)_n-C$$

wobei in der chemischen Formel 4

A Alkyl mit 5 bis 21 Kohlenstoffatomen ist,
EO Ethylenoxid (-$CH_2CH_2O$-) ist,
m 0 ist,
$B_1$ -OCO-, -COO- oder -COOCH($R_1$)COO- ist,

wobei $R_1$ Alkyl mit 1 bis 5 Kohlenstoffatomen ist,

$B_2$ Alkylen mit 1 bis 5 Kohlenstoffatomen, Alkenylen mit 2 bis 5 Kohlenstoffatomen oder Alkinylen mit 2 bis 5 Kohlenstoffatomen ist,
n eine ganze Zahl von 1 bis 3 ist und
C eine Carboxylgruppe ist.

**2.** Superabsorbierende Polymerzusammensetzung nach Anspruch 1,
wobei zumindest ein Teil des Additivs auf Carbonsäurebasis auf einer Oberfläche der superabsorbierenden Polymerpartikel vorhanden ist.

**3.** Superabsorbierende Polymerzusammensetzung nach Anspruch 1, wobei in der chemischen Formel 1
A -$C_6H_{13}$, -$C_{11}H_{23}$, -$C_{12}H_{25}$, -$C_{17}H_{35}$ oder -$C_{18}H_{37}$ ist.

**4.** Superabsorbierende Polymerzusammensetzung nach Anspruch 1, wobei in der chemischen Formel 1

$B_1$

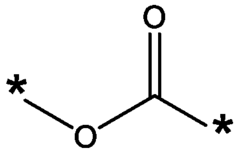

oder

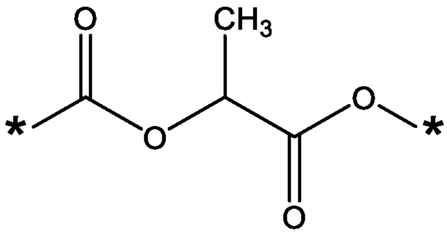

ist,
* eine Bindungsstelle mit einem benachbarten Atom ist.

**5.** Superabsorbierende Polymerzusammensetzung nach Anspruch 1,
wobei das Additiv auf Carbonsäurebasis zumindest eines ist, das aus der Gruppe ausgewählt ist, die aus einer Carbonsäure, die durch die chemische Formel 1 dargestellt ist, einem Alkalimetallsalz davon und einem Erdalkalimetallsalz davon besteht.

**6.** Superabsorbierende Polymerzusammensetzung nach Anspruch 1,
wobei das Additiv auf Carbonsäurebasis eine der Verbindungen ist, die durch die folgenden chemischen Formeln 1-1 bis 1-7 dargestellt sind:

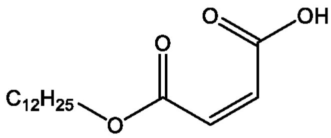

**1-1**

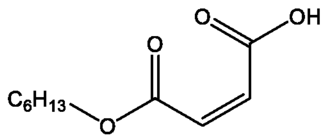

**1-2**

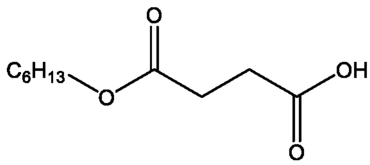

**1-3**

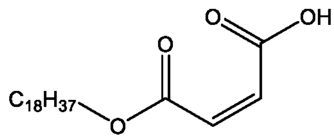

**1-4**

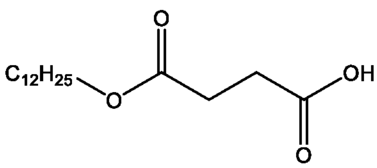

**1-5**

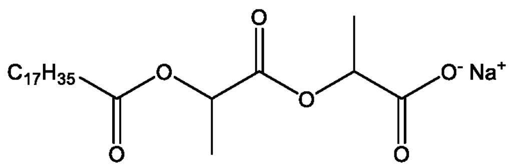

**1-6**

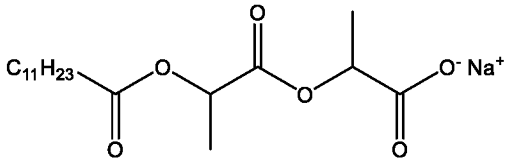

**1-7**

**7.** Superabsorbierende Polymerzusammensetzung nach Anspruch 1,

ferner umfassend eine oberflächenvernetzte Schicht, die durch weiteres Vernetzen des vernetzten Polymers unter Verwendung eines Oberflächenvernetzungsmittels auf mindestens einem Teil der Oberfläche der superabsorbierenden Polymerpartikel gebildet ist.

## Revendications

**1.** Composition de polymère superabsorbant comprenant

des particules de polymère superabsorbant contenant un polymère réticulé d'un monomère insaturé à base d'éthylène soluble dans l'eau ayant des groupes acides au moins partiellement neutralisés et un agent de réticulation interne ; et
un additif à base d'acide carboxylique,
dans laquelle l'additif à base d'acide carboxylique est un ou plusieurs éléments sélectionnés dans le groupe constitué d'un acide carboxylique représenté par la Formule chimique 1 ci-après et un sel de celui-ci :

[Formule chimique 1]

$$A\left(B_1-B_2\right)_n C$$

dans la Formule chimique 1,

A est un alkyle ayant 5 à 21 atomes de carbone,
$B_1$ est -OCO-, -COO- ou -COOCH($R_1$)COO-,
B2 est -

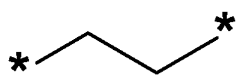
,
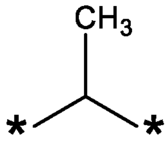
ou
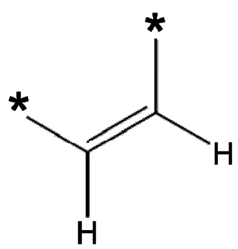
,

dans laquelle * est un site de liaison avec un atome voisin,
dans laquelle $R_1$ est un alkyle ayant 1 à 4 atomes de carbone,
n est 1, et
C est un groupe carboxyle
dans laquelle l'additif à base d'acide carboxylique est inclus dans une quantité comprise entre 0,01 et 10 % en poids sur la base d'un poids total de la composition de polymère superabsorbant, et
dans laquelle la composition de polymère superabsorbant n'inclut pas un composé ayant une unité de glucose contenant une pluralité de groupes hydroxyle dans la molécule,
dans laquelle une composition de polymère superabsorbant est exclue, laquelle comprend
des particules de polymère superabsorbant contenant un polymère réticulé d'un monomère insaturé à base d'éthylène soluble dans l'eau ayant des groupes acides au moins partiellement neutralisés et un agent de réticulation interne ;
des particules hydrophobes ; et
un additif à base d'acide carboxylique,
dans laquelle l'additif à base d'acide carboxylique est un ou plusieurs éléments sélectionnés dans le groupe constitué d'un acide carboxylique représenté par la Formule chimique 1 ci-après et un sel de celui-ci :

[Formule chimique 4]

$$A-(EO)_m-(B_1-B_2)_n-C$$

dans la Formule chimique 4,

A est un alkyle ayant 5 à 21 atomes de carbone,
EO est un oxyde d'éthylène ($-CH_2CH_2O-$),
m est 0,
$B_1$ est -OCO-, -COO- ou -COOCH($R_1$)COO-,
dans laquelle $R_1$ est un alkyle ayant 1 à 5 atomes de carbone,
$B_2$ est un alkylène ayant 1 à 5 atomes de carbone, un alkénylène ayant 2 à 5 atomes de carbone ou un alkynylène ayant 3 à 5 atomes de carbone,
n est un nombre entier de 1 à 3, et
C est un groupe carboxyle.

**2.** Composition de polymère superabsorbant selon la revendication 1, dans laquelle au moins une partie de l'additif à base d'acide carboxylique est présente sur une surface des particules de polymère superabsorbant.

**3.** Composition de polymère superabsorbant selon la revendication 1, dans laquelle dans la Formule chimique 1, A est $-C_6H_{13}$, $-C_{11}H_{23}$, $-C_{12}H_{25}$, $-C_{17}H_{35}$ ou $-C_{18}H_{37}$.

**4.** Composition de polymère superabsorbant selon la revendication 1, dans laquelle dans la Formule chimique 1,

Bi est

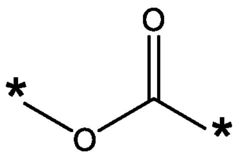
ou
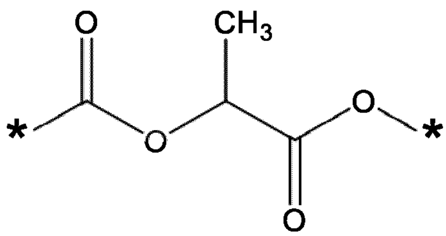
,

dans laquelle * est un site de liaison avec un atome voisin.

**5.** Composition de polymère superabsorbant selon la revendication 1, dans laquelle l'additif à base d'acide carboxylique est un ou plusieurs éléments sélectionnés dans le groupe constitué d'un acide carboxylique représenté par la Formule chimique 1, un sel de métal alcalin de celui-ci et un sel de métal alcalino-terreux de celui-ci.

**6.** Composition de polymère superabsorbant selon la revendication 1, dans laquelle l'additif à base d'acide carboxylique est un composé quelconque des composés représentés par les Formules chimiques 1-1 à 1-7 ci-après :

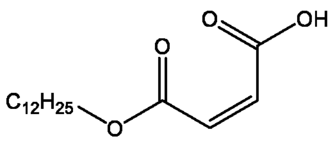
**1-1**

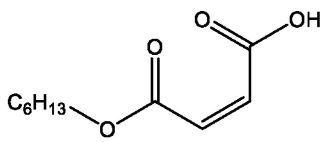
**1-2**

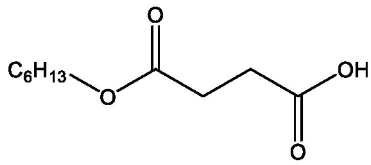

**1-3**

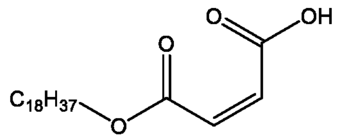

**1-4**

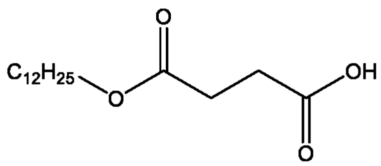

**1-5**

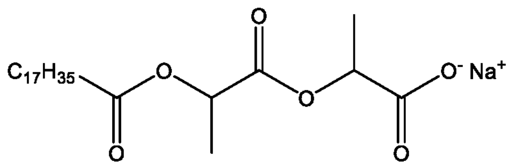

**1-6**

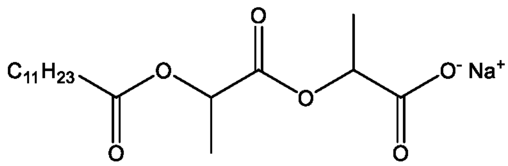

**1-7**

**7.** Composition de polymère superabsorbant selon la revendication 1,
comprenant en outre une couche réticulée en surface formée en réticulant encore le polymère réticulé en utilisant un agent de réticulation de surface sur au moins une partie d'une surface des particules de polymère superabsorbant.

[FIG. 1]

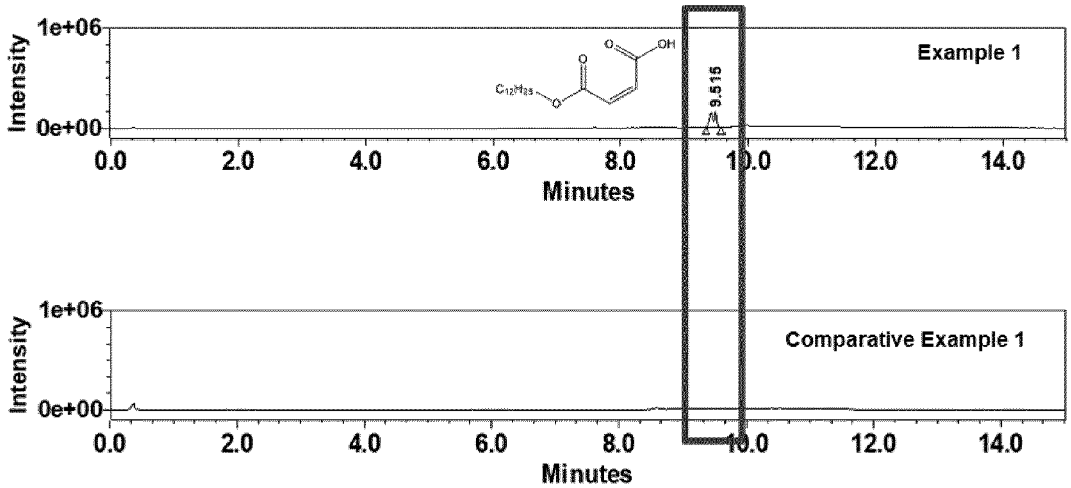
1e+06
0e+00
Intensity
Example 1
9.515
0.0
2.0
4.0
6.0
8.0
10.0
12.0
14.0
Minutes
Comparative Example 1

[FIG. 2]

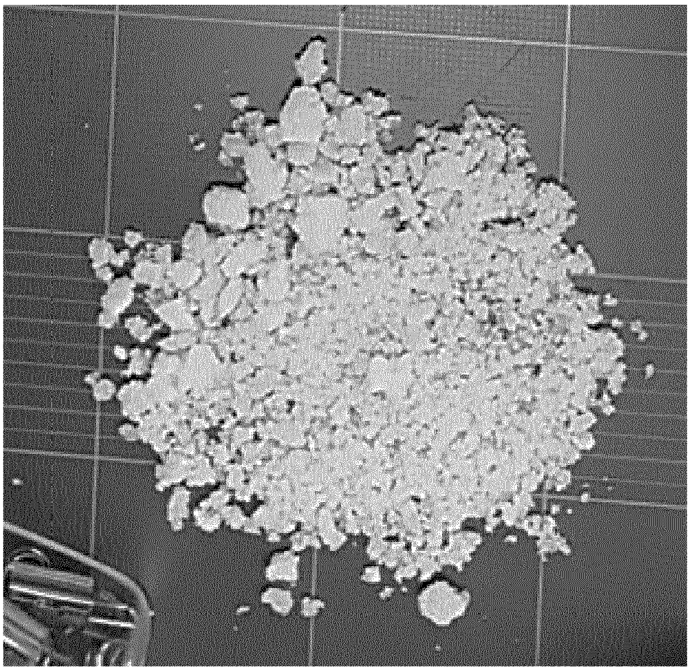

[FIG. 3]

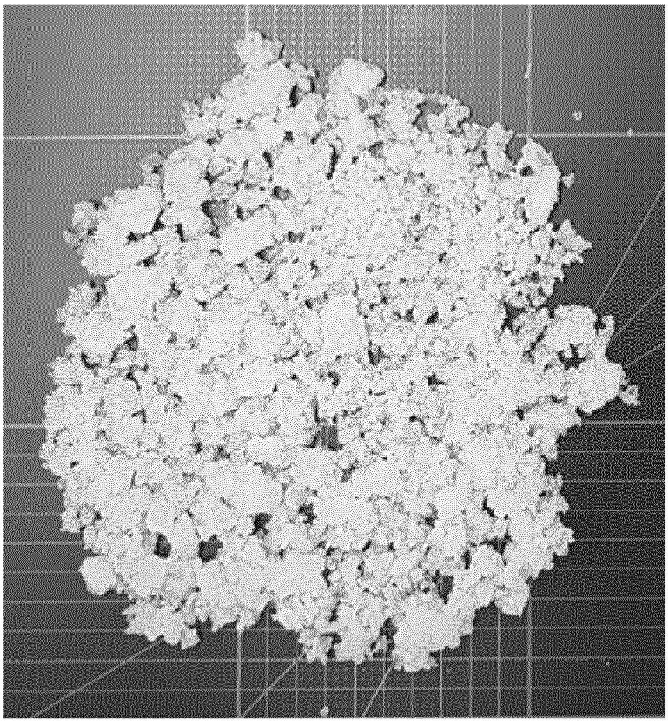

[FIG. 4]

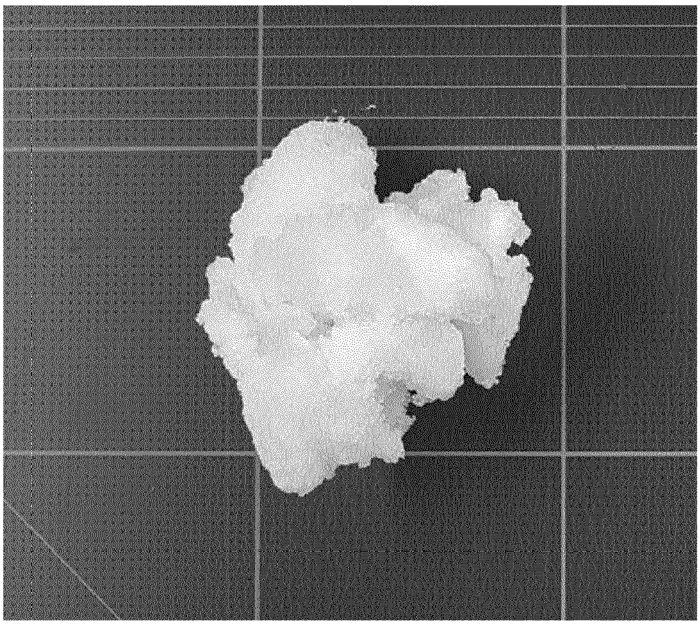

[FIG. 5]

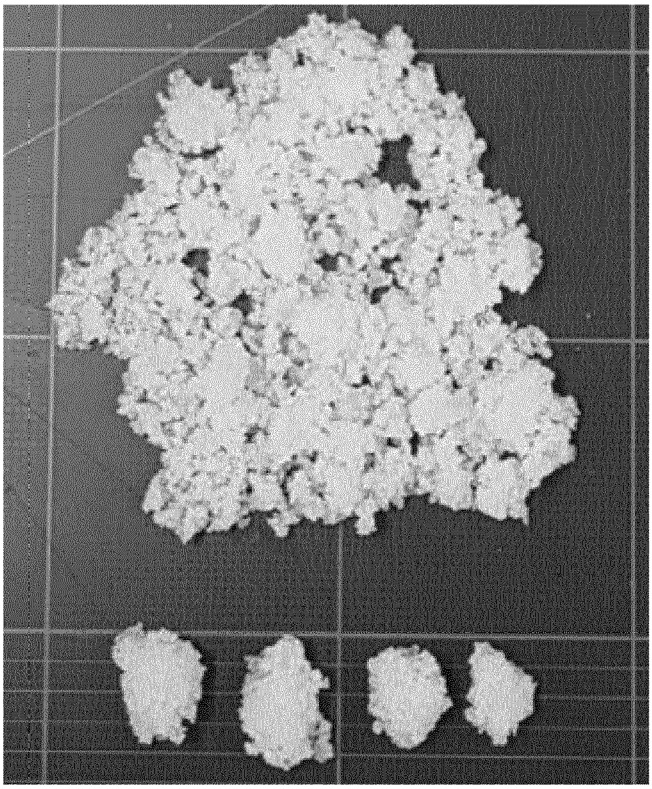

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009076764 A1
- WO 9738740 A1
- EP 4137539 A1


### Non-patent literature cited in the description


- **REINHOLD SCHWALM.** UV Coatings: Basics, Recent Developments and New Application. Elsevier, 2007, 115
- **ODIAN.** Principle of Polymerization. Wiley, 1981, 203